# EUROPEAN PATENT APPLICATION

(11) **EP 4 741 354 A1**
(43) Date of publication of application: **13.05.2026**
(21) Application number: 25209923.9
(22) Date of filing: 20.10.2025
(51) Int. Cl.: C03B 1/00, C03B 9/193, C03B 9/38

(54) **SERVO MOTOR DRIVEN PLUNGER MECHANISM**

(30) Priority: 21.10.2024 US 202463709803 P; 16.10.2025 US 202519360690
(71) Applicant: Emhart Glass S.A., 6312 Steinhausen (CH)
(72) Inventor: RINGUETTE, Timothy A., Unionville, 06085 (US); DUNER, Daniel A., 6010 Kriens (CH)
(74) Representative: Ashton, Gareth Mark

(57) **Abstract**

A plunger actuation arrangement, parison forming arrangement, a forming machine and methods are provided. Improved fluid flow paths are provided. Cooling arrangements for cooling a linear actuator are provided. Attachment and alignment features are provided for attaching and allowing alignment of a plunger relative to the actuator. Simplified mounting arrangements for mounting the actuation arrangement relative to a machine frame are provided.

## Description

### CROSS-REFERENCE TO RELATED PATENT APPLICATIONS

This patent application claims the benefit of U.S. Provisional Patent Application No. 63/709,803, filed October 21, 2024, the entire teachings and disclosure of which are incorporated herein by reference thereto.

### FIELD OF THE INVENTION

This invention generally relates to mechanisms for forming glass parisons from a gob of glass and particularly to plunger mechanisms for forming parisons.

### BACKGROUND OF THE INVENTION

One way to form glass containers is to convert a gob of molten glass into a parison using a first mold, known as a blank mold, which is then transferred to a second mold, known as a blow mold, into the final form of the container.

The formation of the parison may be done either by pressing the gob into contact with the blank mold or operably blowing fluid into the gob, typically air, to press the material of the gob outward and into contact with the blank mold.

A plunger is used in either of these operations, but the plunger has different functions depending on the operation. In the pressing operation, the plunger is pressed into the gob after insertion of the gob into the blank mold to distribute the glass within the blank mold to form the parison. In the blowing operation, the plunger closes off an end of the blank mold and forms an initial cavity in the gob. Thereafter, the fluid is dispensed from the plunger to distribute the glass within the blank mold.

After formation of the parison, the parison is transitioned from the blank mold to the blow mold using an invert. The invert typically pivots about an invert axis between the two molds.

Typically, the invert is fixed relative to a frame of the forming machine.

The invert carries an arm that carries a neck ring and guide ring used to guide the plunger and to form various features of the neck of the container.

The vertical position of the neck ring arm and the required displacement of the plunger relative to the neck ring arm to fully form the parison assists in establishing the overall stroke required for a given parison formation process. However, different neck ring arms or different neck ring arm configurations are used with the invert which can further affect the requisite positioning of a plunger along the plunger actuation axis.

In addition, the system operates in a high temperature environment. As such, cooling of various components is beneficial. In particular, cooling of the plunger and linear actuator, particularly if an electric actuator is used, is beneficial. Even when cooling of the plunger is not required, such as in the blow technique, pressurized fluid is often required to be supplied to the plunger.

Also, the plunger may need to be replaced for maintenance purposes or swapped when a different parison configuration is being produced. This replacement or swapping of plungers does not typically entirely preplace the plunger actuation arrangement. Removal of the plunger and attachment of another plunger can be time consuming resulting in downtime for the entire forming machine.

In the past, pneumatic actuators were used to drive the plunger. Unfortunately, due to inaccuracies in intermediate positions within the stroke of a plunger, complex spring actuated components were included between the actuator and the plunger to more accurately drive the plunger to intermediate positions. However, this increased the complexity, number of components susceptible to wear, as well as introduced inaccuracies and feedback noise due to the inclusion of components such as springs.

### BRIEF SUMMARY OF THE INVENTION

New and improved plunger actuation arrangements for forming parisons, components thereof, and systems incorporating plunger actuation arrangements are provided.

In an example, a parison plunger actuation arrangement including a carriage, a first guide and a linear actuator is provided. The carriage is configured to carry a plunger for use in forming a parison from a gob. The carriage has a first fluid flow port. The first guide is connected to the carriage for guiding motion of the carriage parallel to a plunger actuation axis. The first guide defines a fluid flow path. The fluid flow path is operably fluidly coupled to the first fluid flow port. The linear actuator is coupled to the carriage and is configured to drive the carriage parallel to the plunger actuation axis.

In one example, the first guide has a first tubular member and a second tubular member operably slidable relative to the first tubular member parallel to the plunger actuation axis to adjust an axial length of the first guide. The first and second tubular members form at least part of the fluid flow path of the first guide.

In one example, the first or second tubular member is telescopically received in the second or first tubular member.

In one example, the first tubular member is operably sealingly connected to the second tubular member.

In one example, the linear actuator includes a mounting block. The carriage is movable relative to the mounting block. The mounting block has a mounting block plunger fluid flow path. The fluid flow path of the first guide is operably fluidly coupled to the mounting block plunger fluid flow path by a connecting tube connected to the mounting block and fluidly connected to and interposed between the mounting block plunger fluid flow path and the fluid flow path of the first guide.

In one example, the carriage is on a first side of the mounting block. The connecting tube is on a second side of the mounting block. The first tubular member is operably connected to the carriage and travels with the carriage when the carriage moves along the plunger actuation axis. The second tubular member extends, at least in part, on the second side of the mounting block and connects to the connecting tube on the second side of the mounting block to operably fluidly connect the mounting block plunger fluid flow path to the fluid flow path of the guide.

In one example, the guide is mounted to the mounting block such that a least a portion extends through the mounting block such that at least a portion of the fluid flow path of the first guide extends through the mounting block. However, that portion may not actually define the fluid flow path.

In one example, the first guide includes a third tubular member slidable relative to the first and second tubular members. The third tubular member forming at least part of the fluid flow path of the first guide and operably fluidly connects the portion of the first fluid flow path provided by the first guide with the portion of the first fluid flow path provided by the second guide.

In one example, the first, second and third tubular members are telescopically interconnected.

In one example, a second guide is connected to the carriage for guiding motion of the carriage parallel to the plunger actuation axis. The second guide defining a second flow path, the carriage having a second fluid flow port, the second flow path fluidly coupled to the second fluid flow port.

In one example, a plunger is operably attached to the carriage. The plunger has an internal plunger fluid flow path operably connected to the first and second fluid flow ports. The plunger fluid flow path fluidly connects the first fluid flow port to the second fluid flow port such that a continuous fluid flow path is formed by the first guide, second guide and the plunger.

In many situations this fluid flow path is used to transport cooling fluid through the plunger and then away from the system.

In one example, a plunger is operably attached to the carriage. The plunger has an internal fluid flow path extending between a first port and a second port. The first port is connected to the first fluid flow port of the carriage. The internal fluid flow path connects the second port of the plunger with the first port and the first fluid flow port of the carriage.

In some instances, this arrangement is used to supply fluid for pressurizing the gob to displace the material of the gob to form the parison.

As such, in one example, the plunger is a plunger for use in forming a parison using a blowing technique rather than the pressing technique. The fluid used for forming the parison during the blowing technique exits the plunger through the second port.

In one example, the plunger is a plunger for use in forming a parison using a pressing technique and fluid flow through the internal plunger fluid flow path is used to cool the plunger.

In one example, a source of air is coupled to the first fluid flow path formed by the first guide. When in operation, fluid from the source of air flows through the first fluid flow path from the source of air to the first fluid port.

In one example, the first guide provides lateral support of the carriage in a plane perpendicular to the plunger actuation axis.

In one example, the first guide is not a electromechanical actuator, pneumatic actuator, or a hydraulic actuator.

In one example, the linear actuator is a linear motor having a stator and a slider movable relative to the stator. The slider is free of any fluid flow therethrough for cooling of a plunger or for providing fluid pressure for a blow technique for forming a parison.

In one example, a parison formation system is provided that includes a machine frame, a first plunger actuation arrangement as outlined above, and an adaptor bar. The machine frame includes a mounting base. The mounting base includes a first mounting base plunger fluid flow path. The adaptor bar is mechanically interposed between the mounting block of the linear actuator and the mounting base of the machine frame for operably fixedly mounting the mounting block in a fixed position to the machine frame. The adaptor bar has a first adaptor bar plunger fluid flow path therethrough. The first adaptor bar plunger fluid flow path fluidly connects the first mounting base plunger fluid flow path with first mounting block plunger fluid flow path.

In one example, the mounting block has a first mounting block plunger fluid inlet port for the mounting block plunger fluid flow path. The adaptor bar has a first adaptor bar outlet port for the adaptor bar plunger fluid flow path. The first mounting block plunger fluid inlet port and the first adaptor bar outlet port fluidly connected to one another when the mounting block is affixed to the adaptor bar when the linear actuator is mounted to the machine frame.

In one example, the first mounting block plunger fluid inlet port and the first adaptor bar outlet port are operably configured to sealingly mate with one another when the mounting block is mounted to the adaptor bar.

In one example, a source of air is operably coupled to the mounting base plunger fluid flow path. When in operation, fluid from the source of air flows through the mounting base plunger fluid flow path, the adaptor bar plunger fluid flow path, the mounting block plunger fluid flow path, and fluid flow path of the first guide when flowing to the carriage.

In an example, a method of assembling a parison formation system is provided. The method includes mounting adaptor bar to the mounting base such that the first mounting base plunger fluid flow path is fluidly connected to the first adaptor bar plunger fluid flow path. The method includes mounting the mounting block to the adaptor bar such that the first mounting block plunger fluid flow path is in fluid communication with the first adaptor bar plunger fluid flow path.

In one example, the step of mounting the mounting block to the adaptor bar simultaneously mechanically engages the mounting block to the adaptor bar and fluidly connects the first adaptor bar plunger fluid flow path with the first mounting block plunger fluid flow path.

In one example, a second plunger actuation arrangement is provided. The mounting base includes a second mounting base plunger fluid flow path that is independent of the first mounting base plunger fluid flow path. The adaptor bar is mechanically interposed between the mounting block of the linear actuator of the second plunger actuation arrangement and the mounting base of the machine frame for operably fixedly mounting the mounting block of the second plunger actuation arrangement in a fixed position to the machine frame. The adaptor bar has a second adaptor bar plunger fluid flow path therethrough that is separate from the first adaptor bar plunger fluid flow path. The second adaptor bar plunger fluid flow path fluidly connecting the second mounting base plunger fluid flow path with the mounting block plunger fluid flow path of the second plunger actuation arrangement. Flow through the two separate fluid flow paths are independently controllable, e.g. by way of separate control valves.

In an example, a parison plunger actuation arrangement for use in a machine frame is provided. The machine frame includes an invert to transition a formed parison from a blank mold to a blow mold by pivoting about an invert axis that is generally horizontal.

The parison plunger actuation arrangement includes a carriage and a linear actuator. The carriage is configured to carry a plunger for use in forming the parison from a gob. The carriage is configured to move parallel to a plunger actuation axis. The plunger actuation axis is generally parallel to gravity and perpendicular to the invert axis. The linear actuator is coupled to the carriage and configured to drive the carriage parallel to the plunger actuation axis. The carriage has at least 200 mm of travel parallel to the plunger actuation axis.

In one example, the carriage has at least 205 mm, more preferably 210 mm, more preferably 215 mm and even more preferably 220 mm of travel parallel to the plunger actuation axis.

In one example, the linear actuator includes a mounting block for attaching the linear actuator to the machine frame. The linear actuator includes a stator and a slider. The stator is in a fixed position relative to the mounting block during operation. The slider is moveable parallel to the plunger actuation axis to drive the carriage parallel to the plunger actuation axis.

In one example, the slider has at least 200 mm of travel parallel to the plunger actuation axis relative to the stator.

In one example, the linear actuator is a linear motor.

In one example, the arrangement is free of alternative mounting locations relative to the machine frame such that the linear actuator can be vertically mounted relative to the machine frame in a single vertical position.

In one example, the arrangement is free of a linear actuation position adjustment system for adjusting a position of the linear actuator relative to the machine frame such that the linear actuator may not be mounted in different vertical positions relative to the machine frame in use.

In one example, the arrangement is free of a plunger vertical position adjustment system in the form of a positioning linear actuator positioned mechanically between the linear actuator that drives the carriage and linear actuator vertically relative to the machine frame.

In an example, a parison formation system is provided. The system includes a machine frame, an invert and a parison plunger actuation arrangement as described herein. The invert is fixedly attached to the machine frame for rotational motion about an invert axis. The parison plunger actuation arrangement has the mounting block attached to the machine frame. The carriage has at least 200 mm, preferably 205 mm, more preferably 210 mm, more preferably 215 mm and even more preferably 220 mm of travel parallel to the plunger actuation axis without requiring changing the vertical position of the mounting block relative to the machine frame.

In one example, the invert is not mountable to the machine frame at different vertical heights.

In one example, the invert is attached to the machine frame. The invert defines an invert axis about which the invert rotates between a blank side position and a blow side position. A first neck ring arm is attachable to the invert and a second neck ring arm is attachable to the invert. The first neck ring arm, when attached to the invert, is associated with a first blank mold position along the plunger actuation axis when the invert is in the blank side position. The second neck ring arm, when attached to the invert, is associated with a second blank mold position along the plunger actuation axis when the invert is in the blank side position. The second blank mold position is different than the first blank mold position.

In one example, the first blank mold position is offset from the second blank mold position by at least 25 mm, more preferably 35 mm, more preferably 45 mm, more preferably 55 mm, and even more preferably 70 mm.

In one example, the mounting block is attached to the machine frame in the same vertical location when the first neck ring arm is used and when the second neck ring arm is used.

In an example, a method of forming parisons using the parison formation system as outlined herein is provided. The method includes positioning the invert in the blank side position with the first neck ring arm attached to the invert to position the first neck ring arm adjacent the parison plunger arrangement in the first blank mold position with the mounting block of the parison plunger arrangement attached to the machine frame in a first vertical position. The method includes forming a first parison using a first blank mold and the first neck ring arm. The method includes transitioning the first parison away from the parison plunger arrangement by transitioning the invert to the blow side position. The method includes positioning the invert in the blank side position with the second neck ring arm attached to the invert to position the second neck ring arm adjacent the parison plunger arrangement in the second blank mold position with the mounting block of the parison plunger arrangement attached to the machine frame in the first vertical position. The method includes forming a second parison using a second blank mold and the second neck ring arm.

In one example, the first blank mold position is offset from the second blank mold position by at least 25 mm, more preferably 35 mm, more preferably 45 mm, more preferably 55 mm, and even more preferably 70 mm.

In an example, a parison plunger actuation arrangement includes a carriage and a linear actuator. The carriage has a base and a plunger attachment adaptor holder coupled to the base. The plunger attachment adaptor holder is configured to releasably mount a plunger thereto. The plunger attachment adaptor holder is mounted to the base such that the plunger attachment adaptor holder can float within a float plane relative to the base. The linear actuator is coupled to the carriage configured to drive the carriage parallel to a plunger actuation axis. The float plane is orthogonal to the plunger actuation axis.

In one example, the plunger attachment adaptor holder includes a plunger mounting region. The plunger mounting region has first and second flow ports. The first and second flow ports are in fluid communication with first and second fluid flow paths formed in the base.

In one example, the plunger attachment adaptor holder includes a plunger mounting region and a mounting flange. The system also includes an attachment plate securing the plunger attachment adaptor holder to the base. The attachment plate has a mounting aperture therethrough providing access to the plunger mounting region for selectively attaching a plunger to or removing a plunger from the plunger attachment adaptor holder.

In one example, the mounting flange of the plunger attachment adaptor holder is located axially between the attachment plate and the base.

In one example, the base includes a mounting recess. The mounting flange of the plunger attachment adaptor holder is located within the mounting recess. The mounting recess is sized larger than the mounting flange to provide clearance therebetween within the float plane.

The clearance provides the degree of float within the float plane.

In one example, the attachment plate extends over the mounting flange preventing removal of the plunger attachment adaptor holder from the base.

In one example, the plunger attachment adaptor holder includes a main body, a first retainer and a second retainer laterally spaced from the first retainer. The first and second retainers are attached to the main body. The first retainer has a first offset leg extending outward from the main body parallel to the plunger actuation axis and a first inward extending flange extending from the first offset leg towards the second retainer. A first gap is formed axially between the first inward extending flange and the main body. The second retainer has a second offset leg extending outward from the main body parallel to the plunger actuation axis and a second inward extending flange extending from the second offset leg towards the first retainer. A second gap is formed axially between the inward extending flange and the main body. Mouths of the first and second gaps facing one another. An optional resilient retainer extends outward from the main body. The resilient retainer is resiliently depressible, optionally, into a cavity within the main body.

In one example, the resilient retainer is located laterally between the first and second retainers.

In an example, a parison plunger actuation arrangement is provided. The arrangement includes a carriage having a plunger attachment adaptor holder. The plunger attachment adaptor holder is configured to releasably mount a plunger adaptor thereto. The plunger attachment adaptor holder includes a plunger mounting region. The mounting region is defined in part between first and second retainers. The first and second retainers are laterally spaced apart. The first retainer has a first offset leg extending outward from a main body parallel to a plunger actuation axis and a first inward extending flange extending from the first offset leg towards the second retainer. A first gap is formed axially between the first inward extending flange and the main body. The second retainer has a second offset leg extending outward from the main body parallel to the plunger actuation axis and a second inward extending flange extending from the second offset leg towards the first retainer. A second gap is formed axially between the inward extending flange and the main body. An optional resilient retainer extends outward from the main body. The resilient retainer is resiliently depressible, optionally, into a cavity within the main body. A linear actuator is coupled to the carriage configured to drive the carriage parallel to the plunger actuation axis.

In one example, a first inner surface of the first offset leg is curved and a second inner surface of the second offset leg is curved, the curves of the first and second offset legs being segments of a circle.

In one example, a plunger and plunger adaptor is provided. The plunger adaptor is attached to the plunger. The plunger adaptor has opposed first and second mounting flanges extending radially outward and away from one another. The first and second flanges are angularly receivable into the first and second gaps upon rotation of the plunger adaptor 90 degrees about the plunger actuation axis from an insertion/removal orientation to a mounted orientation.

In one example, a resilient retainer carried by the main body.

In one example, the resilient retainer is resiliently depressible into a cavity in the main body when the plunger adaptor transitions from the insertion/removal orientation to the mounted orientation. The resilient retainer extends outward from the main body and into a cavity in the plunger when the plunger is in the mounted orientation relative to the plunger attachment adaptor holder.

In one example, the resilient retainer is resiliently depressible into the cavity in the main body parallel to the plunger actuation axis.

In one example, the plunger adaptor has a length perpendicular to the plunger actuation axis that is defined by the outer most ends of the first and second mounting flanges and a width defined perpendicular to the length. The length is greater than the width.

In one example, a blow style parison formation assembly includes a linear actuator, a blow style plunger a neck ring and a guide ring. The blow style plunger is operably attached to the linear actuator. The linear actuator is configured to drive the plunger parallel to a plunger actuation axis. The plunger has a plunger body having a radially outer surface. The outer surface has a first, portion, second portion, third portion and fourth portion. The first portion is configured for forming part of the finish region of the parison. The second portion is positioned radially outward from the first portion having a first plunger seal surface. The third portion is positioned radially outward of the first portion and is axially offset from the second portion away from the first portion. The third portion has a blow port formed therein. The blow port is configured for dispensing fluid flow for forming the parison during a blow phase. The fourth portion is positioned radially outward of the second portion. The fourth portion provides a radially outward directed second plunger seal surface. The neck ring has a radially inner surface portion configured to form a portion of the finish of a parison. The guide ring is attached to the neck ring in a fixed axial position relative to the neck ring when the plunger transitions from a first plunger position relative to the plunger actuation axis in which a gob is loaded into an associated blank mold and a second plunger position relative to the plunger actuation axis when a fluid is blown out of the blow port during a blow phase of forming the parison using a blow technique. The guide ring has a radially inner surface. The radially inner surface has a first portion and a second portion. The first portion has a first guide seal surface configured to seal with the first plunger seal surface when the plunger is in the first plunger position. The second portion defining a second guide seal surface configured to seal with the second plunger seal surface when the plunger is in the second plunger position.

In one example, the first portion of the outer surface has a first outer diameter; the second portion of the outer surface has a second outer diameter, greater than the first outer diameter; the fourth portion of the outer surface has a third outer diameter greater than the second outer diameter; the first portion of the radially inner surface has a first inner diameter; and the second portion of the radially inner surface has a second inner diameter greater than the first diameter.

In one example, in the second plunger position, the first, second and third portions of the outer surface do not sealingly contact the radially inner surface of the guide ring such that fluid exiting the blow port can flow past the first, second and third portions of the outer surface and the first portion of the guide ring toward the neck ring.

In one example, the guide ring includes a third portion that forms part of the finish of the parison, the third portion of the guide ring.

In one example, the second inner diameter is greater than the second outer diameter.

In one example, the fourth portion of the outer surface radially interfaces with the second portion of the radially inner surface during both the first and second plunger positions.

In one example, the plunger is disengaged from the guide ring when the plunger is in a third plunger position relative to the plunger actuation axis. The second plunger position is axially between the first and third plunger positions relative to the plunger actuation axis.

In one example, the third plunger position is when the neck ring is moved into registration with the plunger to form a new parison or moved out of registration with the plunger after a parison has been formed and is being transitioned away from the plunger.

In one example, a connection between the plunger and the linear actuator is free of any spring members such that the transition of the plunger from the first plunger position to the second plunger position is due solely to forces generated by actuation of the linear actuator and not due to any spring members.

Avoiding spring members in the connection therebetween reduces feedback noise generated due to any such springs.

In an example, a method of forming a parison using the assembly as outlined above is provided. The method includes transitioning, with the linear actuator, the plunger to the first plunger position such that the first plunger seal surface seals with the first guide seal surface. The method includes inserting a gob into the assembly such that the gob engages the neck ring and the first portion of the outer surface of the plunger. The method includes transitioning the plunger to the second plunger position without axially moving the second portion of the guide ring relative to the neck ring such that the second plunger seal surface radially seals with the second guide seal surface, but the first plunger seal surface no longer seals with the first guide seal surface. The method includes supplying air from the blow port of the plunger to blow the gob to form the parison.

In one example, a connection between the plunger and the linear actuator is free of any spring members such that transitioning the plunger from the first plunger position to the second plunger position is due solely to forces generated by actuation of the linear actuator and not due to any spring members.

In an example, parison formation system including a machine frame, an invert, a carriage and a linear actuator. The invert is fixedly attached to the machine frame for rotational motion about an invert axis to transition a formed parison from a blank mold to a blow mold by pivoting about the invert axis. The carriage is configured to carry a plunger for use in forming the parison from a gob. The carriage is configured to move parallel to a plunger actuation axis. The plunger actuation axis is generally parallel to gravity and perpendicular to the invert axis. The linear actuator is coupled to the carriage and configured to drive the carriage parallel to the plunger actuation axis. The linear actuator has a stator and a slider. The stator is operably fixedly attachable to the machine frame in a single vertical position.

In one example, the operational position of the stator relative to the machine frame cannot be vertically adjusted.

In one example, the linear actuator is not mounted to the machine frame with a height adjustment mechanism such that the operational position of the stator relative to the machine frame parallel to the plunger actuation axis cannot be adjusted. In other words, the stator is only operational in a single vertical position relative to the machine frame.

In one example, a stroke of the slider relative to the stator is such that the carriage has at least 200 mm, more preferably 205 mm, more preferably 210 mm, more preferably 215 mm and even more preferably 220 mm of travel relative to the machine frame parallel to the plunger actuation axis.

In one example, the carriage has no more than 400 mm of travel parallel to the plunger actuation axis relative to the machine frame.

In one example, the linear actuator is fixedly attachable to the machine frame in at least two operational positions that are horizontally offset from but located at a same vertical position.

In one example, the system is free of a height adjustment arrangement between the machine frame and the stator of the linear actuator such that the operational position of the stator cannot be vertically adjusted relative to the machine frame.

In an example, a parison plunger actuation arrangement includes a carriage, a plunger, an electric linear actuator, a heat transfer sleeve, and a clamping sleeve. The carriage is operably attachable to the plunger. The electric linear actuator is coupled to the carriage and configured to drive the carriage parallel to a plunger actuation axis. The linear actuator has a stator and a slider. The slider is moveable relative to the stator. The heat transfer sleeve extends around and operably thermally communicates with the stator. The heat transfer sleeve has a main body and a plurality of angularly spaced apart radially extending fins. The clamping sleeve extends around the heat transfer sleeve. The heat transfer sleeve and clamping sleeve define axially extending fluid passages that extend generally parallel to the plunger actuation axis.

In one example, the heat transfer sleeve and clamping sleeve are each C-shaped. The clamping sleeve clamps around the heat transfer sleeve and compresses the heat transfer sleeve into engagement with the linear actuator.

In one example, a mounting block is configured to operably mount the linear actuator to a machine frame of a forming machine. The mounting block has at least one inlet air flow path. A cooling air manifold operably fluidly couples the at least one inlet air flow path of the mounting block to the axially extending fluid passaged defined, at least in part, by the heat transfer sleeve and the clamping sleeve.

In one example, the heat transfer sleeve extends through an aperture in the mounting block. The mounting bock defines, at least in part, the axially extending fluid passages.

In one example, the mounting block and cooling air manifold are formed, at least in part, from a same piece of material.

In one example, fluid exiting the axially extending fluid passages is not exhausted into the ambient air surrounding the linear actuator or the ambient air surrounding the carriage.

In one example, a pump for pumping the cooling air through the axially extending fluid passages flows the cooling air for cooling the linear actuator within the axially extending fluid passages parallel to the plunger actuation axis in a direction extending away from the carriage. In one example, the pump may be a fan for conveying the cooling air flow.

In one example, parison formation system having a first parison plunger actuation arrangement is provided. The system includes a machine frame and an adaptor bar. The machine frame includes a mounting base, the mounting base that includes a first mounting base linear actuator cooling fluid flow path therethrough. The adaptor bar is mechanically interposed between the mounting block of the linear actuator of the first parison plunger actuation arrangement and the mounting base of the machine frame for mounting the mounting block of the first parison plunger actuation arrangement to the machine frame. The adaptor bar has a first adaptor bar linear actuator cooling fluid flow path therethrough. The first adaptor bar linear actuator cooling fluid flow path fluidly connects the first mounting base flow path with the at least one inlet air flow path of the mounting block of the first parison plunger actuation arrangement.

In one example, attachment of the mounting block of the first parison plunger actuation arrangement to the adaptor bar fluidly connects the first adaptor bar flow path with the at least one inlet air flow path of the mounting block of the first parison plunger actuation arrangement without requiring manual fluid connections by the operator.

In one example, the system includes a second parison plunger actuation arrangement. The adaptor bar has a first exit port fluidly connected to the inlet air flow path of the mounting block of the first parison plunger actuation arrangement. The adaptor bar has a second exit port fluidly connected to the inlet air flow path of the mounting block of the second parison plunger actuation arrangement.

In one example, the first mounting base linear actuator cooling fluid flow path has a third exit port operably fluid connected to the first exit port of the adaptor bar. The first mounting base linear actuator cooling fluid flow path has a fourth exit port distinct from the third exit port. The fourth exit port is operably fluidly connected to the second exit port of the adaptor bar such that the first mounting base linear actuator cooling fluid flow path is operably connected to both the first and second exit ports of the adaptor bar.

In an example, a plunger assembly for a parison plunger actuation arrangement includes a plunger attachable to a carriage. The carriage has a plunger attachment adaptor holder. The plunger attachment adaptor holder is configured to operably releasably mount the plunger assembly thereto. The plunger attachment adaptor holder includes a plunger mounting region defined, in part, between first and second retainers. The plunger assembly includes a plunger and a plunger adaptor. The plunger is configured to engage a gob of glass during formation of a parison. The plunger adaptor includes a mounting body and first and second split rings halves. The mounting body is configured to engage the plunger attachment adaptor holder and having a threaded aperture. The first threaded split ring half has a first threaded region. The second threaded split ring half has a second threaded region. The first and second split ring halves combine to form a threaded attachment member for threadedly engaging the threaded aperture of the mounting body to secure the first and second threaded split ring halves to the mounting body. The first and second threaded split rings operably engaging the plunger for axially securing the plunger to the mounting body.

In one example, the plunger has a radially outward extending annular flange that is engaged by a radially inward opening annular groove defined by the first and second split ring halves.

In one example, the mounting body defines at least one fluid flow aperture therethrough that is independent of the threaded aperture.

In one example, at least one of the first and second threaded split rings defines a fluid flow aperture that communicates with the at least one fluid flow aperture of the mounting body.

In an example, a parison plunger actuation arrangement includes a plunger assembly, a carriage and a linear actuator. The carriage has a plunger attachment adaptor holder. The plunger attachment adaptor holder is configured to releasably mount the plunger adaptor thereto to operably releasably attach the plunger to the carriage. The plunger attachment adaptor holder includes a plunger mounting region. The mounting region is defined in part, between first and second retainers. The mounting body is operably secured within the plunger mounting region by the first and second retainer. The linear actuator is coupled to the carriage and is configured to drive the carriage parallel to a plunger actuation axis.

In an example, a parison formation system including a machine frame, a carriage, an electric linear actuator, a first axially extending heat transfer fluid passage, and an adaptor bar is provided. The machine frame includes a mounting base that includes a first mounting base flow path therethrough. The carriage is configured to carry a plunger and is configured to move parallel to a plunger actuation axis. The plunger actuation axis is generally parallel to gravity. The electric linear actuator is coupled to the carriage and is configured to drive the carriage parallel to a plunger actuation axis. The linear actuator has a stator and a slider. The slider is moveable relative to the stator. The linear actuator has a mounting block that has a mounting block fluid flow path therethrough. The first axially extending heat transfer fluid passage is in thermal communication with one or more of the stator and/or slider. The first axially extending heat transfer fluid passage extends generally parallel to the plunger actuation axis. The first axially extending heat transfer fluid passage is in fluid communication with the mounting block fluid flow path. The adaptor bar is mechanically interposed between the mounting block of the linear actuator. The mounting base of the machine frame mounts the mounting block in a fixed position relative to the machine frame. The adaptor bar has a first adaptor bar flow path therethrough. The first adaptor bar flow path fluidly connects the first mounting base flow path with mounting block fluid flow path.

In an example, the attachment of the mounting block to the adaptor bar fluidly connects the first adaptor bar flow path with the at least one inlet air flow path of the mounting block without requiring manual fluid connects by the operator.

In an example, a heat transfer sleeve extends around and operably thermally communicates with the stator. The heat transfer sleeve has a main body and a plurality of angularly spaced apart radially extending fins. A second sleeve extends around the heat transfer sleeve. The heat transfer sleeve and second sleeve define a plurality of axially extending fluid passages that extend generally parallel to the plunger actuation axis. The first axially extending heat transfer fluid passage is one of the plurality of axially extending fluid passages formed between the heat transfer sleeve and the second sleeve.

In an example, a parison formation system includes a machine frame, a carriage, a linear actuator, a carriage sleeve, and a carriage hard stop. The carriage is configured to carry a plunger. The carriage is configured to move parallel to a plunger actuation axis relative to the machine frame. The plunger actuation axis is generally parallel to gravity. The linear actuator is coupled to the carriage and is configured to drive the carriage parallel to a plunger actuation axis. The carriage sleeve has an internal cavity in which the carriage moves. The carriage has a skirt that remains within the carriage sleeve when the carriage is actuated parallel to the plunger actuation axis between an extended and retracted state. The carriage hard stop is mounted in a fixed position relative to the machine frame. The carriage hard stop defines an abutment extending into the path of the carriage limiting the axial displacement of the carriage parallel to the plunger actuation axis.

In an example, an invert is attached to the machine frame. The invert defines an invert axis about which the invert rotates between a blank side position and a blow side position. A first neck ring arm is attachable to the invert. The first neck ring arm, when attached to the invert, is associated with a first blank mold position along the plunger actuation axis. A neck ring cooler has at least one neck ring cooler exit port directed at the neck ring when the invert is in the blank side position.

In one example, the carriage hard stop is mounted to the neck ring cooler and extends outward therefrom.

In one example, the carriage has a second abutment surface aligned with the abutment of the carriage hard stop. The carriage has a carriage skirt sized and shaped to correspond to the cross-sectional size and shape of the carriage sleeve. The carriage sleeve has a distal end that is spaced a first distance from the second abutment surface parallel to the plunger actuation axis. The abutment is spaced a second distance from an end of the carriage sleeve parallel to the plunger actuation axis The second distance is less than the first distance such that if the second abutment surface of the carriage abuts the carriage hard stop the carriage skirt remains inserted in the carriage sleeve.

In an example, the carriage hard stop is adjustably mountable relative to the machine frame to adjust a position of the abutment parallel to the plunger actuation axis.

In one example, a method of calibrating a parison formation system is provided. The method includes positioning the first neck ring arm adjacent a side of the carriage hard stop opposite the abutment. The method also includes confirming that the first neck ring arm is substantially parallel to the side of the carriage hard stop.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a simplified schematic illustration of a forming machine used to form glass containers;
FIG. 2 illustrates different neck ring arms having different blank mold positions relative to an invert axis of the invert of the forming machine of FIG. 1;
FIG. 3 illustrates a prior pneumatic plunger actuation system positioned adjacent the neck ring arms of FIG. 2 illustrating positioning the plunger actuation system in different locations relative to the frame of the forming machine and the invert thereof;
FIG. 4 illustrates a plurality of plunger actuation units removed from the forming machine of FIG. 1 attached to a same base;
FIGS. 5-7 are perspective illustrations of different plungers that can be used with the plunger actuation units of the instant disclosure;
FIG. 8 is a perspective illustration of a single plunger actuation unit;
FIG. 9 is a cross-sectional illustration of the plunger actuation unit of FIG. 8 showing a fluid flow path through the plunger actuation unit and the attached plunger, with the flow path removed from the slider of the linear actuator;
FIG. 9A is an enlarged partial illustration of a flow path similar to FIG. 9.;
FIG. 10 is a perspective partial exploded illustration of the plunger actuation unit showing the plunger removed from the carriage of the plunger actuation unit;
FIG. 11 is a cross-sectional illustration of a plunger actuation unit having a blow and blow plunger attached thereto;
FIG. 12 is an end view illustration of the plunger actuation unit illustrating clearance permitting lateral float of the plunger relative to the plunger actuation unit;
FIGS. 13-16 illustrate the connection arrangement used to connect a selected plunger to the carriage of the plunger actuation unit;
FIG. 17 is a partial cross-sectional illustration illustrating the connection between the plunger and the plunger attachment adaptor holder of the carriage as well as the resilient retainer securing the plunger in the mounted orientation;
FIG. 18 is a cross-sectional illustration through the connection region of the plunger and carriage;
FIGS. 19 and 21 illustrate an interaction between a blow and blow plunger with a corresponding neck ring and guide ring without the use of a movable thimble;
FIG. 20 illustrates the interaction of a blow and blow plunger in combination with a movable thimble relative to a neck ring and guide ring;
FIG. 22 illustrates a partial cross-section of the plunger actuation unit illustrating a portion of a cooling flow path for cooling the linear actuator;
FIG. 23 is a cross-sectional illustration of the plunger actuation unit further illustrating the cooling arrangement for cooling the linear actuator;
FIG. 24 is illustrative of the cooling flow path and direction of fluid flow for cooling the linear actuator; and
FIG. 25 is a perspective illustration of the plunger actuation unit;
FIG. 26 is a perspective illustration of an alternative mounting arrangement for a plunger tip;
FIG. 27 is an exploded illustration of the assembly of FIG. 26;
FIG. 28 is a perspective illustration of a plunger actuation arrangement mounted to a mounting base of a machine frame of a forming machine;
FIG. 29 is a portion of the mounting arrangement of the machine frame;
FIG. 30 is an exploded illustration of a mounting base and associated supply tube of the machine frame;
FIG. 31 is an exploded illustration of a pair of mounting bases of a machine frame and associated adaptor bars;
FIG. 32 is a cross-sectional illustration of a mounting base, an adaptor bar, and a plurality of mounting blocks of an plunger actuation unit in an assembled configuration illustrating various fluid flow paths therethrough;
FIG. 33 is a cross-sectional illustration of the assembly of FIG. 28 illustrating cooling air flow for cooling an electric linear actuator thereof;
FIG. 33A is a cross-sectional illustration showing fluid flow paths through a mounting base and attached adaptor bar;
FIG. 34 is a cross-sectional illustration illustrating a fluid flow path for suppling air to a carriage of the plunger actuation unit as well as a flow path through which air is exhausted from the carriage of the plunger actuation unit;
FIG. 35 is a cross-sectional illustration with a carriage in an extended position;
FIG. 36 is a cross-sectional illustration with a carriage in a retracted position;
FIG. 37 is a profile illustration of the carriage adjacent a carriage hard stop and a neck ring cooler;
FIG. 38 is a perspective illustration of an embodiment of a carriage hard stop and a neck ring cooler; and
FIGS. 39 and 40 are further partial illustrations of the carriage hard stop and neck ring cooler relative to a neck ring arm, neck ring, and carriage.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

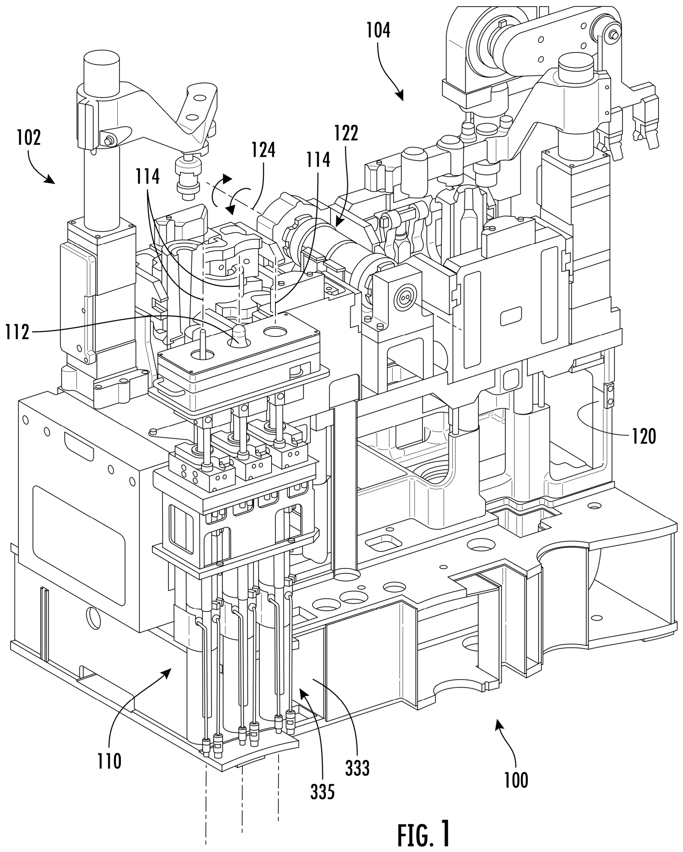

FIG. 1 is a simplified illustration of a forming machine 100 ("forming machine 100") for forming containers such as glass containers and more particularly glass bottles or jars. Typically, the forming machine 100 will have a blank side 102 and a blow side 104.

In the blank side 102, a gob of glass will be dispensed into a blank mold in which the gob of glass will be converted to a parison. Typically, the parison, once formed, will include the finish of the container which is configured to accommodate a closure for the container. The finish may include screw threads and/or a sealing surface that mate with the corresponding closure. The forming machine may also include a transfer ring used to secure the parison when transferring the parison from the blank mold to a blow mold. Typically, to form the parison, the gob is either pressed using a plunger to push the glass material outward and into contact with the blank mold or exposed to compressed fluid (e.g. air) to push the glass material outward and into contact with the blank mold.

The resulting parison will typically have the finish region that defines the mouth of the container.

In the blow side 104, the parison will be inserted into a blow mold where the parison is manipulated into the finished container. Typically, compressed air is injected into the parison through the mouth of the container that is formed during formation of the parison. The compressed air continues to push the glass material outward and into contact with the blow mold to form the final shape of the container.

The process from gob to container that uses the plunger to press the gob during parison formation and then compressed fluid to form the finished container from the parison is referred to press and blow or simply PB. The process from gob to container that uses compressed air to expand the gob during formation of the parison and then compressed fluid to form the finished container from the parison is referred to as blow and blow or simply BB. PB and BB thus typically have different processes during the parison formation step.

While PB and BB have different processes for deforming the gob into the parison, the forming machine has a plunger actuation arrangement 110 that may be used in both processes that actuates a plunger tailored to the specific process along a plunger actuation axis 114 between various plunger positions during formation of the parisons. In FIG. 1, the forming machine 100 is configured to form three containers at a time and thus there are three plungers 112 (only two of which is illustrated in FIG. 1) within the plunger actuation arrangement 110. Each plunger has its own plunger actuation axis 114. However, more or less plungers and corresponding actuation components may be used in other forming machines 100.

Typically, the plunger actuation arrangement 110 can be reconfigured to have different shaped, sized and/or configured plungers 112 depending on the shape, size, and configuration of the resulting parison as well as whether the PB technique is used or the BB technique is used.

The forming machine 100 includes a machine frame 120 that forms the base to which the rest of the components are mounted or positioned relative thereto during the container forming process. The machine frame generally acts as a ground with which the components generally move during operation.

One component of the forming machine 100 is the invert 122 that operably transitions the formed parison from the blank side 102 to the blow side 104 by pivoting about invert axis 124. The invert 122 is mounted to the machine frame 120 in a fixed position. When reconfiguring the forming machine setup when changing the production configuration to change the type, size, configuration, etc. of the container being formed, the position of the invert 122 and its invert axis 124 does not change relative to the machine frame 120.

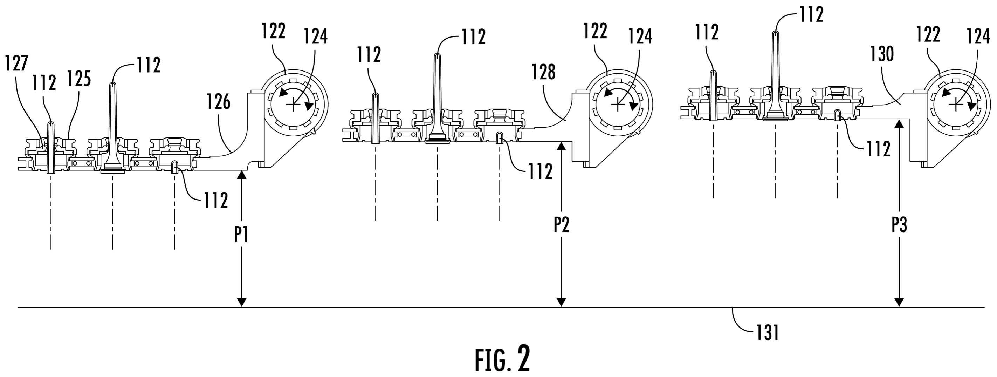

While not shown in FIG. 1 but with reference to FIG. 2, a neck ring arm 126 is attached to the invert 122 and is rotated about invert axis 124 to transition the parisons from the blank side to the blow side. However, depending on the shape, size, and/or configuration of the parison and the corresponding blank molds for forming the parisons, in some systems, different neck ring arms 126, 128, 130 may be used that adjust relative vertical positioning relative to the invert axis 124, and consequently the machine frame 120. As illustrated in FIG. 2, neck ring arm 126 is positioned at P1, neck ring arm 128 is positioned at P2, and neck ring arm 130 is positioned at P3. These positions are positioned relative to a reference plane illustrated by line 131. For example, P1, P2, and P3 could be measured from a constant location on the machine frame.

The neck ring arm 126 typically carries a neck ring 125 and a guide ring 127 which is attached to the neck ring 125. Also, the neck ring arm typically has two haves that form the neck ring arm with the neck rings carried therebetween.

These different positions P1, P2, P3 set and/or correspond to the position of the corresponding blank molds used to form the corresponding parisons. Typically, the difference between the vertical position between P1 and P3 is ~100 mm. Such as illustrated in FIG. 2, in some systems, different neck ring arms having different configurations may be used. In other implementations, a variable neck ring arm having variable heights (e.g. variable positions) relative to the invert axis 124 (or reference plane 131) may be provided to accommodate formation of differently configured parisons. In some implementations, the neck ring arm could simply be mounted to the invert in a different position.

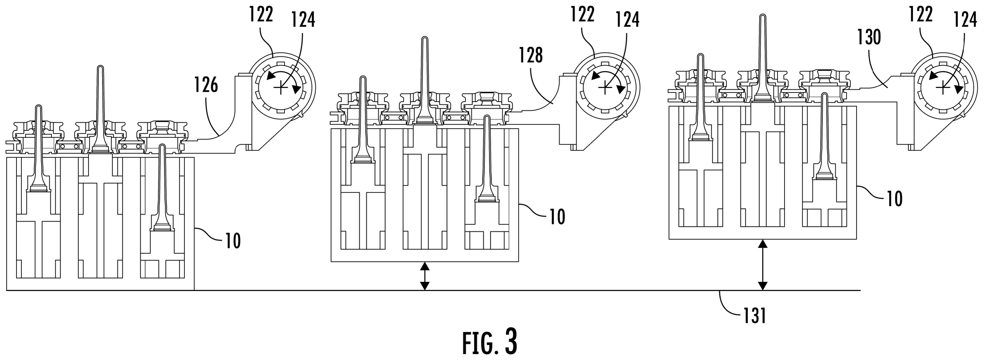

In prior systems that utilize pneumatic actuators within the plunger actuation arrangement, the position at which the plunger actuation arrangement was physically mounted to the machine frame 120 was changed to accommodate the different neck ring arm configurations P1-P3. This is illustrated schematically in FIG. 3. In particular, schematic plunger actuation arrangement 10 is illustrated at different positions relative to reference plane 131. Unfortunately, this creates significant down time, reduced repeatability, decreased production efficiency and can take numerous operators to effectuate the change in mounting of the actuation arrangement 10 relative to the invert 122 and its invert axis 124.

The adjustable mounting was typically done in two different ways. In one way, the relevant components of the plunger actuation arrangement 10 were mounted to a manually driven actuator, e.g. a threaded shaft, and the operator would manually adjust the position of the plunger actuation arrangement 10 by rotating the threaded shaft. One problem with this is the force load generated by the plunger actuation arrangement 10 during parison formation was translated to the machine frame 120 via that positioning arrangement and particularly the threaded shaft which is undesirable.

Alternatively, in some positioning arrangements, physical mounting locations such as mounting holes located in the frame of the plunger actuation arrangement 10 at different locations associated with P1, P2, and P3 were used when attaching the frame of the plunger actuation arrangement 10 to the machine frame 120. However, again, this would take significant time to change from one setup to another. Further, this situation provided for limited fine vertical height adjustment or required difficult interacting wedge arrangements for fine tuning the height positioning. Once positioned, a further clamping feature was used to fix the position of the frame of the plunger actuation arrangement 10 to the machine frame 120.

Several issues with prior designs that required adjustment of the plunger actuation arrangement included that 1) jobs were often designed around the limitation of the system such that different jobs used the same height, limiting the adaptability of the forming machine 100, 2) adjustment was required to be manual, 3) tools were required to loose and tighten the attachment mechanisms and/or to operate the height adjustment mechanisms, 4) mechanical parts of the height adjustment mechanisms absorbed the operational forces generated during plunger operation, 5) mismatches occurred between the height adjustor position and the plunger mechanism which could cause titled plunger mechanisms, 6) when worn out, the height adjustment mechanism need to be replaced resulting in down time and was difficult, 7) limited specific height adjustment points (e.g. the second method identified previously), and 8) manual fine adjustment.

This limitation was exacerbated when using pneumatic linear actuators because the length of the actuator's stroke was fixed due to the sealed system in which the piston of the linear actuator was located (e.g. the pressure chamber of the pneumatic cylinder).

To that end, the plunger actuation arrangement 110 of embodiments utilizes linear actuators in the form of linear motors and particularly linear servo motors.

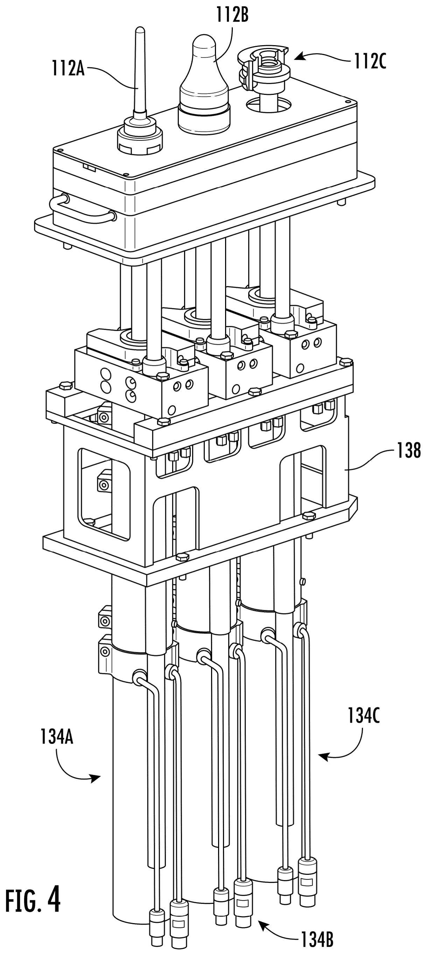

FIG. 4 illustrates a representative plunger actuation arrangement 110 removed from the forming machine 100. The plunger actuation arrangement 110 is a triple gob mechanism as it has three separate plunger actuation units 134A, 134B, 134C, which may be reference generically by reference character 134. For illustrative purposes, the plunger actuation arrangement 110 has three different types of plungers 112A, 112B, 112C attached to the individual plunger actuation units 134A, 134B, 134C.

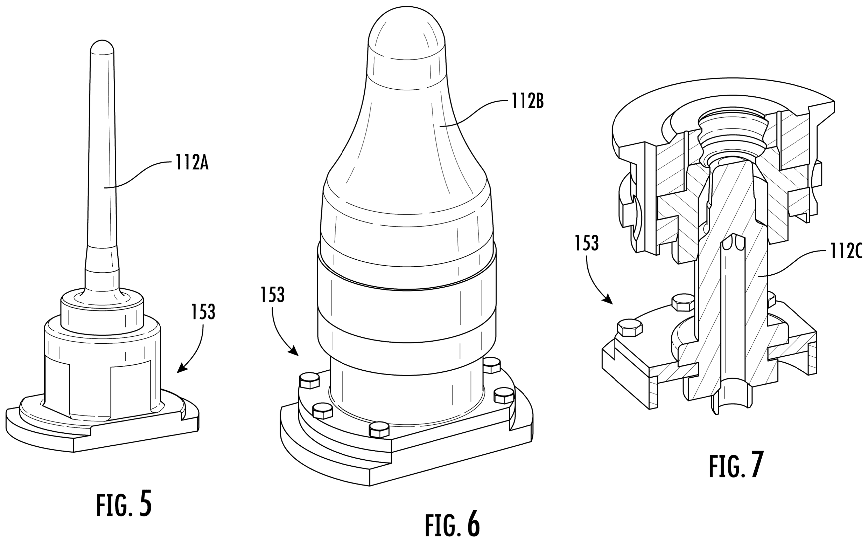

With reference to FIGS. 5-7, plunger 112A is used for narrow neck press and blow operations. Plunger 112B is used for wide mouth press and blow operations. Plunger 112C is used for blow and blow operations. The plungers 112A-112C are interchangeable within the system depending on the operation of the forming machine 100.

The individual plunger actuation units 134A, 134B, 134C, are substantially identical. However, in FIG. 4, different plungers are attached to the linear actuators thereof for illustrative purposes. As such, the description of one plunger actuation unit is applicable to the others. Further, the plunger actuation units may be referred to generically simply with reference character 134.

Each plunger actuation unit 134 is operably fixedly attached to the machine frame 120 of the forming machine. While the plunger actuation unit 134 can be removed for maintenance and conversion purposes (such as to adjust the lateral spacing between adjacent plunger actuation units 134 - i.e. the spacing between the plunger actuation axes of adjacent plunger actuation units), the plunger actuation unit 134 may be mounted in a same vertical position relative to the machine frame 120 and invert 122 and the corresponding invert axis 124 for all neck ring arm configurations and all corresponding blank mold positions P1-P3. This is a significant benefit over prior systems where the plunger actuation units and/or plunger actuation arrangement 110 was required to be mounted or positioned in different vertical locations for different system configurations.

In this example, the plunger actuation arrangement 110 includes a frame 138 to which each plunger actuation unit 134 is attached. The frame 138 is then mechanically fixed to the machine frame 120 and remains attached to the machine frame in the same position for operational positions P1-P3 and any intervening positions.

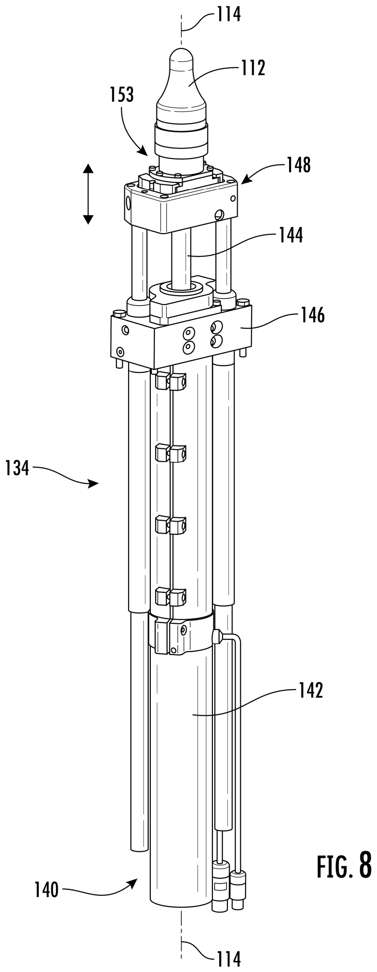

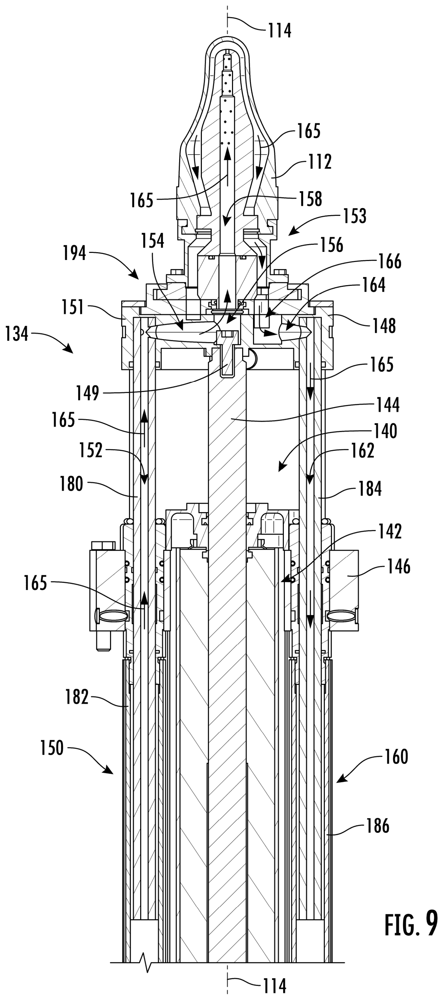

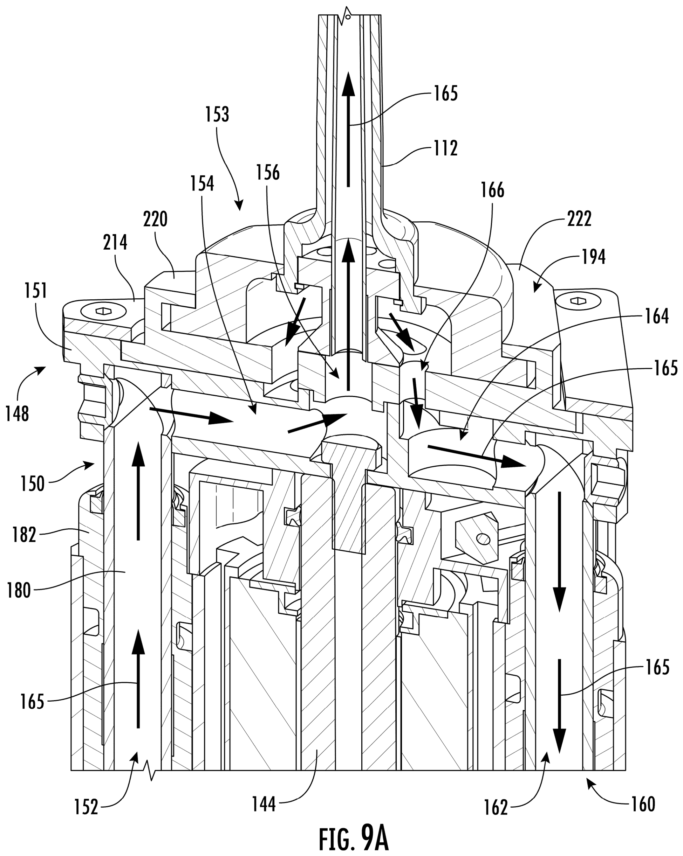

With reference to FIGS. 8 and 9, the plunger actuation unit 134 includes a linear actuator 140 in the form of a linear servo motor that includes a stator 142 and slider 144 that moves relative to stator 142 parallel to plunger actuation axis 114. The slider 144 may also be called a forcer.

In this example, the slider 144 is a magnetic rod that is carried within or relative to the stator 142. In this example, the slider 144 does not include a central flow path for compressed fluid used to either cool the plunger, such as press plungers 112A, 112B, or to provide the pressurized fluid for the blow phase of forming the parison such as for use with plunger 112C.

By providing a solid slider 144, the magnetic volume of the slider 144 can be optimized such that the mass of the slider 144 is increased for a given envelope such that a larger amount of force is provided in a same envelope as a slider that provides a flow path through the center thereof.

The linear actuator 140 is operably attached to a mounting block 146 for attaching the linear actuator 140 to frame 138 and then operably to the rest of the machine frame 120. In some examples, frame 138 is not provided and each plunger actuation unit 134 is operably secured to the machine frame by way of mounting block 146.

The slider 144 is operably mechanically affixed to a carriage 148 to which the plunger 112A-112C is attached. Preferably, the plunger is removably attached to the carriage 148 so that the plungers 112A-112C can be swapped depending on operation of the forming machine 100.

In this example, the carriage 148 is rigidly attached to the slider 144. In particular, no resilient members such as springs are located between the slider 144 and the carriage 148. Further, no springs are located between the plunger 112 and the carriage 148 such that, operably, no springs are located between the plunger and the slider 144.

By removing any springs in the load path between the linear actuator 140 and the plunger, a more consistent force profile is provided to the plunger 112 during operation. This provides more consistent control of the plunger actuation unit 134 as feedback information, such as current values, are more consistent during operation of the system. However, when springs are used, the springs provide inconsistences that can generate noise within the feedback and control system that can affect the control of the liner actuator 140. Further, springs can wear overtime such that the feedback information will begin to deteriorate as the characteristics of the springs change.

In prior designs that used pneumatic and hydraulic actuators, springs were incorporated between the plunger and the linear actuator to allow for the plunger to be positioned in more than two positions. However, in the illustrated example, the operable connection of the plunger 112 to the slider 144 provides an improvement over prior pneumatic and hydraulic systems as no springs are required to be interposed between the slider 144 and the plunger 112. This is because the linear servomotor can be controlled to precisely position the plunger 112 at precise positions parallel to the plunger actuation axis 114 throughout the parison formation process.

FIG. 9 illustrates the connection of the slider 144 to carriage 148. Here, a simple screw 149 directly secures the carriage 148 to slider 144 and particularly a base 151 of the carriage 148. Other connections are contemplated such as threaded connections or welding.

As noted, the slider 144 is preferably a solid shaft without a flow passage for carrying fluid for cooling the plunger or for providing the pressure for blowing the parison into shape. As such, the illustrated example includes a first guide 150 operably connected to the carriage 148. The guide 150 provides lateral support in the X-Y plane that is orthogonal to the plunger actuation axis 114 (i.e. the Z axis).

In addition to providing lateral support, the first guide 150 defines a fluid flow path 152 therein for supplying fluid to the carriage 148. This fluid flow path 152 can provide cooling fluid such as for cooling a plunger used in a press and blow operation and/or the fluid for pressurizing the gob to form the parison in a blow and blow operation. Typically, this fluid is compressed air.

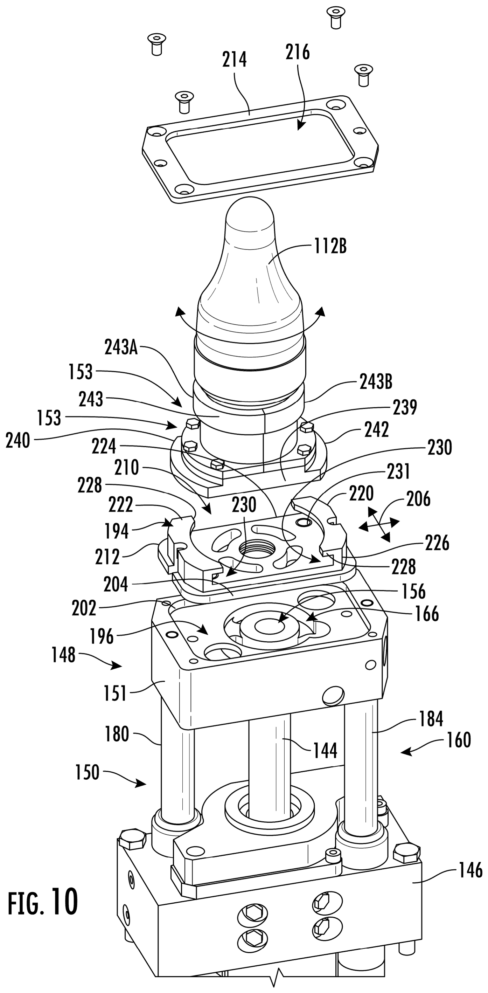

With additional reference to FIGS. 9A and 10, the carriage 148 and particularly base 151 defines a first lateral flow path 154 that connects to a first fluid flow port 156 (see also FIG. 10). The first fluid flow port 156 can be operably coupled to a flow path 158 (see FIG. 9) of the plunger 112 when the plunger 112 is attached to the carriage 148.

In addition to the first guide 150, the illustrated example includes a second guide 160. The second guide 160 is similar to the first guide 150 and includes a second fluid flow path 162. The second fluid flow path 162 connects to a second lateral flow path 164 provided by carriage 148 that connects to a second fluid flow port 166 (see also FIG. 10).

In the illustrated example of FIG. 10, which includes a plunger configured for press and blow operation, the opposite end of the flow path 158 through plunger 112 is connected to the second fluid flow port 166 such that the first and second flow paths 152, 162 are operably fluidly connected to one another when the plunger 112 is mounted to the carriage 148.

Thus, cooling fluid illustrated by arrow 165 can be supplied via the first flow path 152, pass through the plunger via flow path 158, and then exit via second flow path 162 (and all interconnecting flow paths). Thus, a continuous flow path would be formed by first flow path 152, flow path 158 and second flow path 162. Here, heated fluid is exhausted by way of the second guide 160.

As noted, this continuous flow path applies to when a plunger is cooled by way of the fluid flowing through the flow path, such as for press and blow operation. However, in other situations, such as blow and blow, this flow path may not be completed and/or used for cooling purposes. However, one of the guides 150, 160 could be used to supply fluid for performing the blow step during forming of the parison in a blow and blow operation. In some instances, the fluid may be used for both cooling as well as for performing the blow step.

In this example, material of the slider 144 is not removed to define any of these flow paths increasing the material available for force generation.

Further, by providing the second flow path 162, the exhaust fluid that has been heated by passing through the plunger 112 can be discharged to a remote location rather than in the general area of the plunger 112 and/or blank mold within the forming machine 100.

In this example, focusing on FIG. 9, the first and second guides 150, 160 are telescopic to allow for length adjustment of the guides 150, 160 and to accommodate the linear actuation of carriage 148 to drive plunger 112 parallel to the plunger actuation axis 114. In particular, the first guide 150 includes a first member 180 that is telescopically slidably received by a second member 182. Each of the first and second members 180, 182 defines a part of the first flow path 152 of the first guide 150. Thus, the first member 180 is operably sealed to the second member 182, such as by a gasket or o-ring.

Similarly, the second guide 160 includes a first member 184 that is telescopically slidably received by a second member 186. Each of the first and second members 184, 186 defines a part of the second flow path 162 of the second guide 160. Thus, the first member 184 is operably sealed to the second member 186, such as by a gasket or o-ring.

The flow paths 152, 162 and particularly the structural components forming the flow paths 152, 162 may be configured to handle compressed air at or above 400 kPa.

Here, members 180, 182, 184, 186 are round tubular members. However, other examples could use non-round tubular member such as rectangular or triangular tubular members.

While only two members are illustrated for each of guides 150, 160, more than two members could be provided. For example, a third member could be provided between the first and second members. The three members would be operably fluidly connected.

While not illustrated, a source of pressurized fluid would be operably fluidly attached to the first guide 150 and the first flow path 152. While the system has been described with flow path 152 as an inlet side and flow path 162 as an outlet side, the flow could be reversed. This source of fluid could provide the fluid at at least 400 kPa, particularly when used in a blow and blow configuration.

The first and second flow ports 156, 166 are configured to operably provide fluid access to be connected to the flow port(s) of the selected plunger 112.

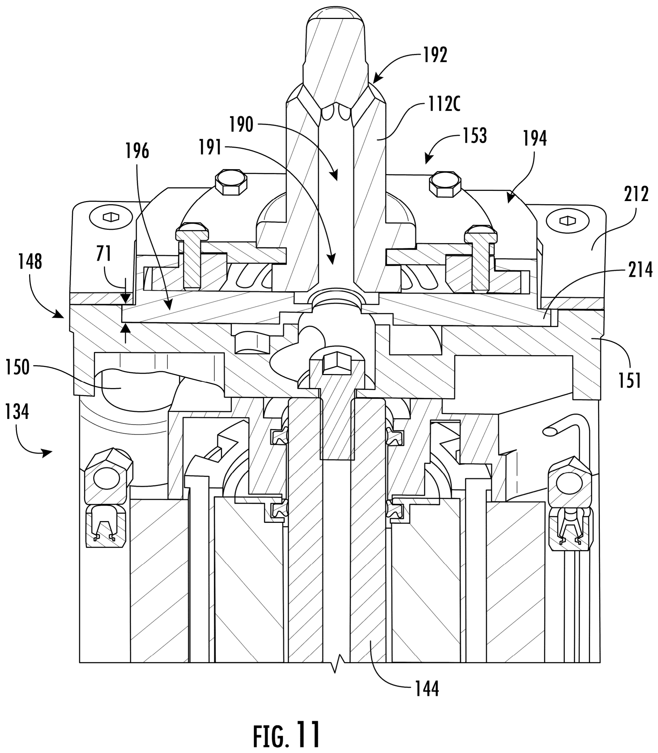

In a second configuration, such as illustrated in FIG. 11, a blow and blow plunger 112C is illustrated connected to the carriage 148. Here, the plunger 112C does not use fluid only for cooling the plunger, but instead uses fluid to physically deform the gob to form the parison. Plunger 112C has internal flow path 190 that has inlet port 191 that cooperates with port 156. The pressurized fluid exits the plunger 112C through outlet port 192 formed in an outer surface of plunger 112C.

It should be noted that the first and second guides 150, 160 are not linear actuators and thus do not provide active actuation force for driving the carriage 148 parallel to the actuation axis 114. While it is contemplated that springs could be added to guides 150, 160 to offset the amount of force required to drive the carriage 148, such a spring situation would not be considered a linear actuator such as an electromechanical actuator, pneumatic actuator, or a hydraulic actuator.

To allow for simple and quick changing of the attached plunger 112, the carriage 148 includes a plunger attachment adaptor holder 194 coupled to base 151 and the plunger 112 includes an adaptor 153 that cooperates with adaptor holder 194.

In operation, the plunger 112 will mate with a neck ring of the blank mold during parison formation. When a plunger 112 is affixed to the linear actuator without the ability for lateral movement, the plunger 112 and/neck ring or guide ring can undesirably wear and/or provide increased undesirable friction on the system exists.

As such, in one example, but not required in all examples, the plunger 112 is operably mounted to the carriage 148 in a manner that allows the plunger 112 to float within the X-Y plane that is orthogonal to the plunger actuation axis 114. This X-Y plane may be referred to as a float plane.

In this example, the floating capability is provided by the coupling between the plunger attachment adaptor holder 194 and base 151. The plunger attachment adaptor holder 194 is permitted to float within the X-Y plane relative to the base 151.

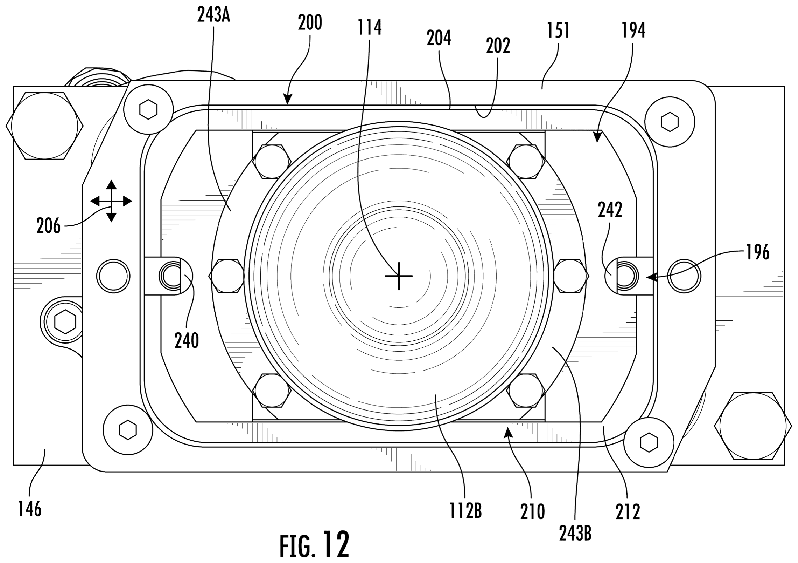

With reference to FIGS. 10 and 12, the plunger attachment adaptor holder 194 is mounted within a recess 196 in the base 151. A radial clearance gap 200 is formed between a wall surface 202 of base 151 forming recess 196 and outer wall 204 of the plunger attachment adaptor holder 194. This radial clearance gap 200 provides the amount of float of the plunger attachment adaptor holder 194 relative to the base 151 within the float plane.

The float and X-Y plane is illustrated by arrow 206 in FIG. 12.

In this example, the plunger attachment adaptor holder 194 includes a plunger mounting region 210 and mounting flange 212. An attachment plate 214 operably secures the plunger attachment adaptor holder 194 to the base 151. The attachment plate 214 includes a mounting aperture 216. The mounting aperture 216 provides access to the plunger mounting region 210 such that corresponding mounting features of the plunger 112 can engage the plunger attachment adaptor holder 194 for selectively attaching and removing a plunger relative to the plunger attachment adaptor holder 194.

In this example, the mounting flange 212 is located axially between the attachment plate 214 and the base 151 (see e.g. FIG. 11). The thickness T1 of mounting flange 212 is substantially equal to the gap between the attachment plate 214 and the bottom of recess 196 of base 151. As such, limited friction is provided between the plunger attachment adaptor holder 194 and the base 151 and/or attachment plate 214. This facilitates the floating feature within the float plane.

While the illustrated example uses recess 196, other examples can eliminate the recess. Further, other examples could have the recess provided by the attachment plate 214.

In this example, the attachment plate 214 is attached to base 151 using screws.

With reference to FIGS. 10 and 11, the plunger attachment adaptor holder 194 includes first and second retainers 220, 222 that are laterally spaced apart from one another. The first and second retainers 220, 222 are attached to a main body 224.

While not required, in this example, the mounting flange 212 is provided by the main body 224.

The first and second retainers 220, 222 extend axially outward from the main body 224 parallel to the plunger actuation axis 114. Each retainer includes an offset leg 226 and a laterally inward extending flange 228. The inward extending flange 228 being axially spaced from the main body 224 forming a gap 230 axially between the flange 228 and main body 224. In this example, the laterally inward extending flanges 228 extending from the corresponding offset leg 226 inward toward the other flange of the other one of the first and second retainers 220, 222.

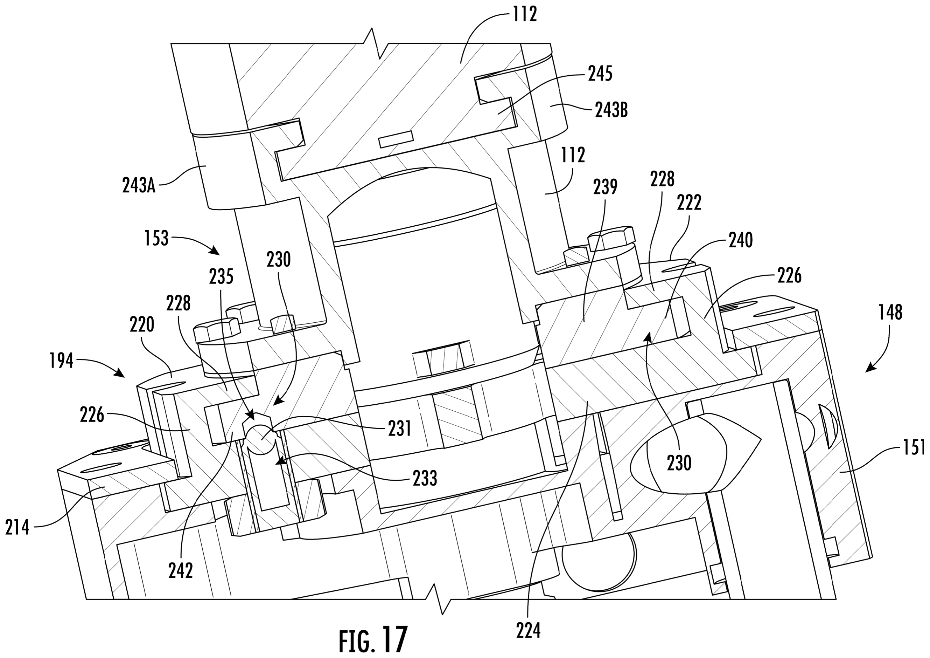

With reference to FIG. 17, a resilient retainer 231 is attached to the plunger attachment adaptor holder 194. The resilient retainer 231 extends axially outward from the main body 224. Here, the resilient retainer 231 is mounted within a cavity 233 formed in the main body 224. The resilient retainer 231 can be depressed into the cavity 233 during attachment and detachment of a plunger 112 and/or an adaptor 153 mounted to plunger 112.

The plunger 112 operably has a corresponding cavity 235 in which the resilient retainer 231 extends when the plunger 112 is in its proper mounted orientation relative to the carriage 148. This engagement inhibits rotational motion of the plunger 112 relative to the plunger attachment adaptor holder 194 about axis 114 when the plunger 112 is properly mounted.

In this example, the resilient retainer 231 is a spring biased ball. However, other retainers are contemplated. Further, the ball of the spring biased ball travels generally parallel to the plunger actuation axis 114. However, other configurations may have the resilient retainer 231 move in other directions, e.g. parallel to the X-Y plane.

The mounting region 210 is located between the first and second retainers 220, 222.

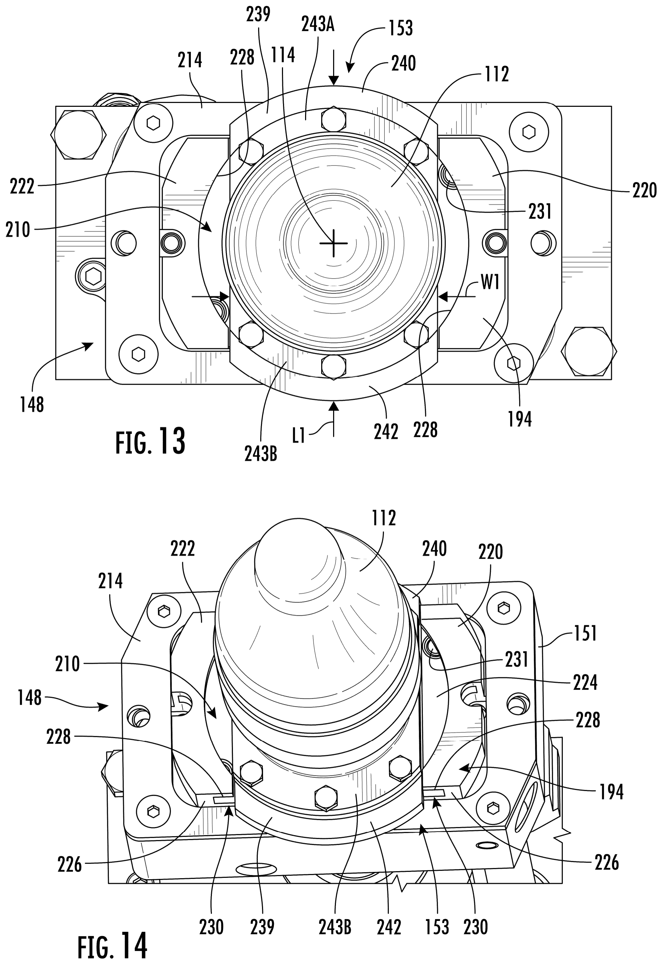

With additional reference to FIGS. 13-17, the features for attaching the plunger 112 by way of adaptor 153 to the carriage 148 will be described.

With particular reference to FIG. 17, adaptor 153 has a mounting body 239 and a mounting arrangement 243 that is in the form of split ring halves 243A, 243B. The split ring halves 243A, 243B engage and secure plunger 112 to the mounting body 239. Here, each split ring half 243A, 243B is attached to the mounting body 239 and engages a radially extending flange 245 of the plunger 112 to secure the plunger 112 to the mounting body 241. This allows for removably attaching the plunger to the mounting body 239. In particular, the split ring halves 243A, 243B define an annular channel that engages the radially extending flange 245 of the plunger tip 241. Other shapes for the channel are contemplated.

In this example, screws or bolts axially secure the split ring halves 243A, 243B to the mounting body 239.

The plunger 112 is configured to engage a gob of glass during at least of the formation process of the parison.

The mounting body 241 may include various air flow paths for cooling purposes and/or blow or kick back operation of the plunger.

The mounting body 239 has opposed first and second mounting flanges 240, 242 that extend radially outward away from one another. The flanges 240, 242 cooperate with the adaptor holder 194 and are received in corresponding gaps 230 between corresponding flanges 228 and main body 224. The mounting flanges 240, 242 define a length L1 that is greater than spacing S1 between inner edges of flanges 228 of the retainers 220, 222. However, a width W1 of the mounting flanges 240, 242 and/or the mounting region of the plunger 112 is smaller than the spacing S1 such that the plunger 112 can be inserted between or removed from between the retainers 220, 222 within mounting region 210 (see e.g. FIGS. 13-14). This insertion/removal can occur parallel to the plunger actuation axis 114. Once seated against main body 224 within mounting region 210, the plunger 112 can be rotated about axis 114 until flanges 240, 242 are received in gaps 230.

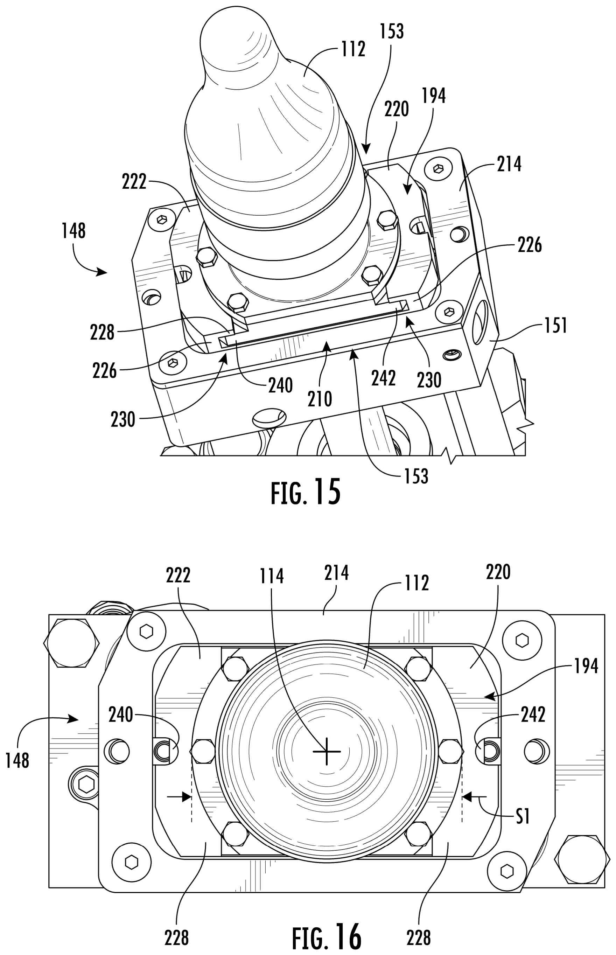

When the plunger 112 and adaptor 153 rotate about axis 114 from the insertion/removal orientation (see FIGS. 13-14) relative to adaptor holder 194 to a mounted orientation (see FIGS. 15-16) in which flanges 240, 242 are within gaps 230, the plunger 112 and particularly mounting body 239 of adaptor 153 will depress the resilient retainer 231 into its cavity 233. Once the plunger 112 has rotated the designated amount, typically 90 degrees (see transition from FIG. 13 to FIG. 16), the resilient retainer 231 will align with and resiliently extend into a cavity 235 formed in the mounting body 239 of the adaptor 153. This engagement will inhibit angular rotation of adaptor 153 and consequently plunger 112 relative to the adaptor holder 194 from the mounted orientation toward the insertion/removal orientation. FIG. 17 illustrates the resilient retainer 231 operably engaged with the plunger 112 by way of adaptor 153.

While the resilient retainer 231 in this example is illustrated as actuating parallel to the plunger actuation axis 114, the resilient retainer 231 could be oriented in alternative orientations. For instance, it could be carried by offset leg 226 and extend generally perpendicular to axis 114.

After rotation to the mounting orientation, the flanges 230 axially secure the adaptor 153 and plunger 112 to the adaptor holder 194.

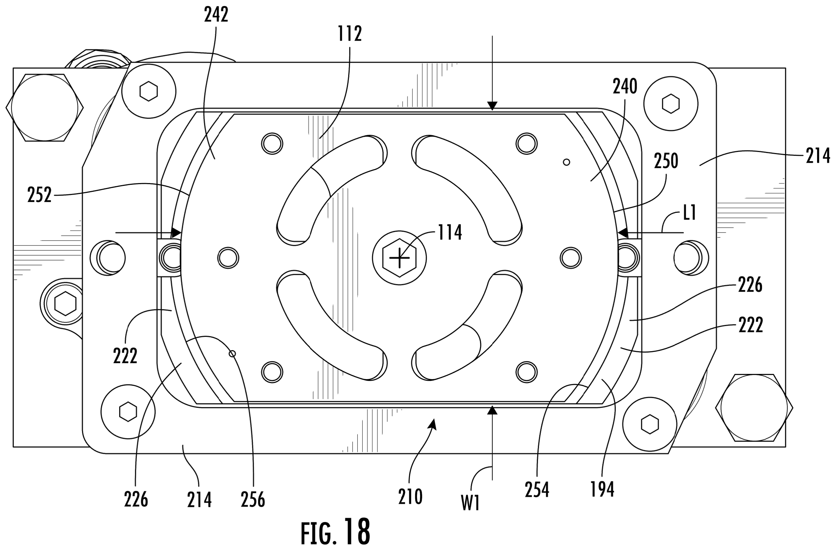

FIG. 18 is a cross-sectional illustration illustrating the plunger in the mounted orientation. In this view, it can be seen that the distal ends 250, 252 of flanges 240, 242 are arcuate, and preferably form segments of a circle about axis 114. Similarly, the inner surfaces 254, 256 of offset legs 226 are arcuate and preferably form segments of a circle about axis 114. The diameter of the circle segments of ends 250, 252 is smaller than the diameter of the circle segments of surfaces 254, 256. This configuration facilitates the rotation from the insertion/removal orientation to the mounted orientation.

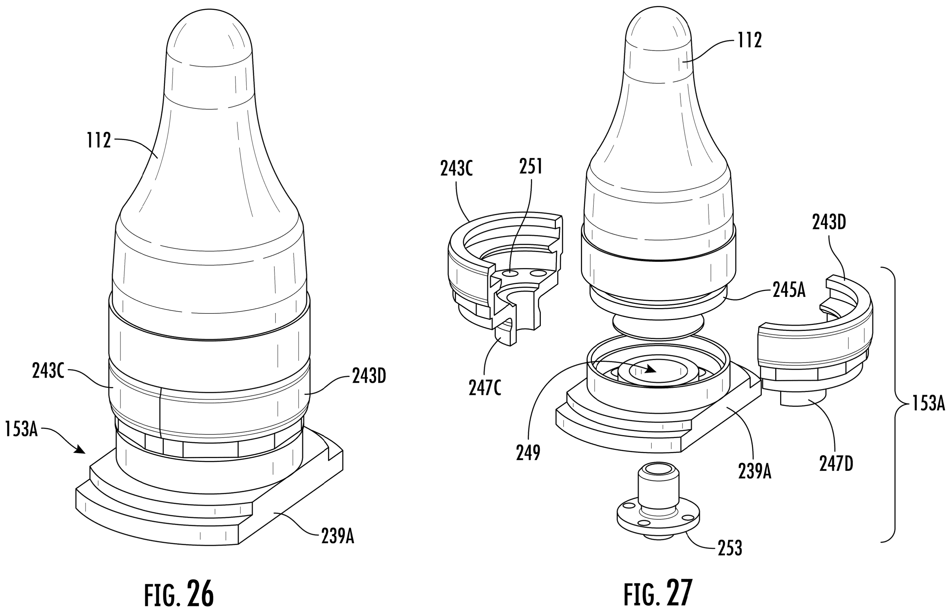

FIGS. 26 and 27 illustrate a plunger 112 in combination with an alternative adaptor 153A. The adaptor 153A attaches to adaptor holder 194 in the same manner as outlined above. However, this adaptor 153A is assembled differently than the prior described adaptor 153.

Adaptor 153A includes mounting body 239A and a threaded split ring defined by split ring halves 243C, 243D. The split ring halves 243C, 243D have threaded regions 247C, 247D that, when abutted against one another, form a threaded boss that threadedly engages threaded aperture 249 of the mounting body 239A. In this example, the threaded aperture 249 has the radially inner surface thereof threaded and the boss formed by the combination of threaded regions 247C, 247D has the radially outer surface thereof threaded.

Like in the prior designs, the split ring halves 243C, 243D engage radially extending flange 245A of the plunger 112.

As illustrated in FIG. 27, one or more of the split ring halves 243C, 243D may have one or more fluid flow apertures that communicate with one or more fluid flow apertures formed in the mounting body 239A. In some examples, the threaded boss formed by the threaded regions 247C, 247D may also define a fluid flow aperture. These fluid flow apertures can function as outlined above for press and blow operations as well as blow and blow operations depending on the particular configuration of the plunger 112.

A lock member 253 locks the components of the adaptor 153A in place and in engagement with plunger 112. In one example, the lock member 253 threads into aperture 249 from the opposite side as threaded regions 247C, 247D.

The plunger 112 interacts with a neck ring, which typically carries a guide ring. The neck ring, guide ring, plunger and/or various combinations thereof define the finish and portions of the neck of the resulting container. The neck ring also operates to retain the parison as it is transferred by way of invert 122 between the blank side and blow side of the forming machine and particularly from the blank mold to the blow mold.

During the cycle of forming a parison, the plunger 112 is typically driven parallel to the plunger actuation axis 114 between two maximum positions and may have at least one intermediate position during the forming process. The different axial positions along axis 114 may have different purposes depending on if the system is using press and blow or blow and blow operation.

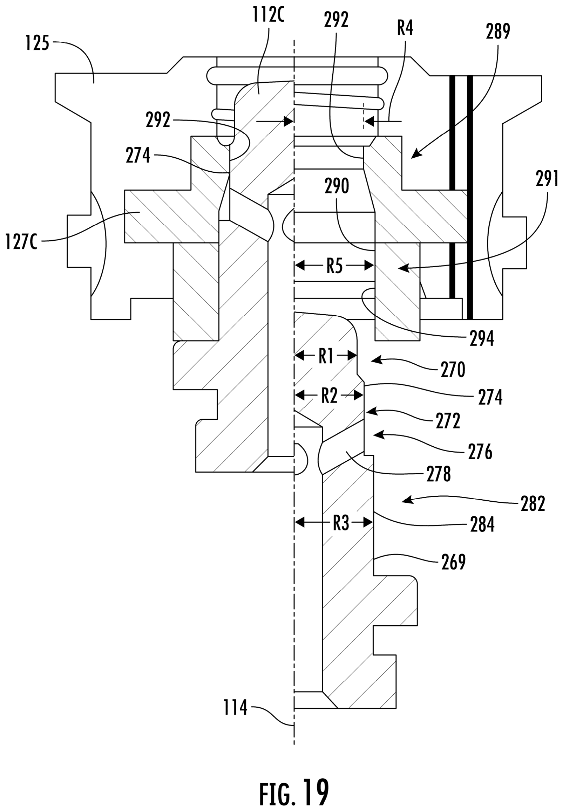

FIG. 19 illustrates a blow and blow process and the two maximum positions. Here, the up position is illustrated on the left side of FIG. 19 and the retracted position is illustrated on the right side of the FIG. 19.

Typically, the retracted position is used when the neck ring arm 126 and invert 122 transition into the blank side in preparation of forming a parison or out of the blank side to transition a formed parison to the blow side. The main purpose of this position is to clear the plunger 112 from interfering with the neck ring arm 126, neck ring 125 or guide ring 127.

At the opposite end of the stroke is the up position. This position for blow and blow operations is typically used when a new gob is being inserted into a blank mold. Here, the plunger 112 closes off the neck ring 125 and guide ring 127 assembly. Also, in this position, the finish of the parison/container is formed.

When using a press and blow operation, the maximum up position is used when the gob is pressed by the plunger 112 to distribute the glass within the blank mold to form the parison.

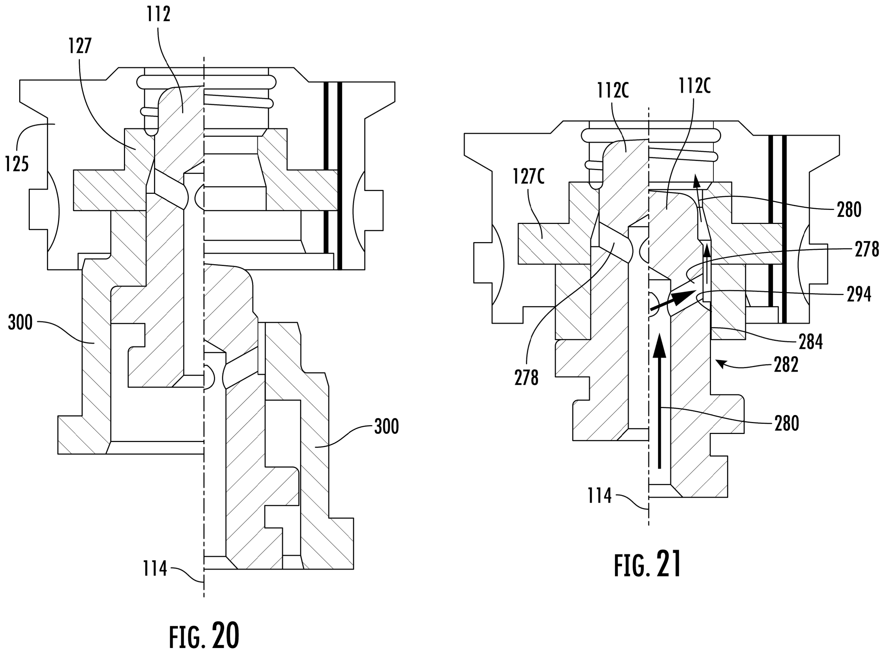

The typical parison formation process will have a third intermediate axial position between the two maximum positions. However, due to reduced control accuracy using pneumatics and hydraulic actuators, prior systems typically included one or two springs to locate the plunger in the intermediate axial position. Further, for blow and blow operations, further moving components such as a thimble (see reference character 300 in FIG. 20) were used to assist in the forming process.

By using the electric linear servo motor, many of the components used to position the plunger in the intermediate position are able to be disposed of thereby eliminating wear parts as well as inconsistencies in the force provided by the plunger actuation unit during cyclical operation.

One particular component that the instant inventors have identified could be eliminated is the axially translatable thimble 300 that was used to seal the plunger to the neck ring 125 and guide ring 127 during the blow operation of forming the parison. As such, in some examples, a blow and blow system can eliminate use of the thimble as illustrated in FIGS. 19 and 20.

With reference to FIGS. 19 and 21, the plunger 112C directly seals with the guide ring 127C during the blow operation when the plunger 112C is in an intermediate axial position along the plunger actuation axis.

In the instant example, the plunger 112C has various portions having different diameters to perform different functions for different operations during the parison formation cycle.

With reference to FIG. 19, the outer surface 269 of the blow and blow plunger 112C, as illustrated in FIGS. 19 and 21, has multiple portions. A first portion 270 is used to form part of the finish of the bottle and has a first radius R1. A second portion 272 axially offset from the first portion has a second radius R2 greater than first radius R1. This region provides a first plunger seal surface 274. A third portion 276 is axially offset from the second portion and include at least one flow port 278 through which compressed fluid exits the plunger 112C during the blow process of forming the parison (arrows 280 illustrate this blow process in FIG. 21). A fourth portion 282 is axially offset from the third portion and has a third radius R3 that is greater than first and second radii R1, R2. This region provides a second plunger seal surface 284.

The guide ring 127C is axially secured to the neck ring 125 during the parison forming process. As such, the guide ring 127C does not move parallel to axis 114 when the plunger 112C is transitioned between its various positions during the parison forming process.

The guide ring 127C has a radially inner surface 290 that has a first portion 289 that has a first guide seal surface 292 that seals with the first plunger seal surface 274 when the plunger 112C is in the up position (see e.g. the left side of FIG. 19). The first portion has an inner radius R4.

The guide ring 127C has a second portion 291 axially offset from the first portion 289 that has a second inner radius R5 that is greater than the inner radius R4 of the first portion 289. The second portion 291 defines a second guide seal surface 294. The second seal surface 294 seals with the second plunger seal surface 284 when the plunger 112C is in the intermediate blow position (see e.g. the right side of FIG. 21). When the plunger 112C is in this intermediate position, flow port 278 is exposed to the neck ring 125 such that the fluid may exit the flow port 278. Further, when the plunger 112C is in the intermediate position, the first plunger seal surface 274 no longer seals with the first guide seal surface 292. Thus, fluid exiting port 278 is able to flow to and press the glass of the gob inserted into the blank mold to form the parison.

Here, the fluid flow will flow through the mouth of the container that is formed by the first portion 270 of the plunger 112C when the gob is inserted into the blank mold.

As can be seen, the plunger 112C directly seals with the guide ring 127C in both the up position (left side of FIGS. 19 and 21) as well as in the intermediate blow position (right side of FIG. 21). In the retracted position, the plunger is moved to an axial position along axis 114 that allows for the neck ring 125 and guide ring 127C to transition into and out of alignment with the plunger 112C without undesirable interference or contact that could damage one or multiple of the components.

As illustrated in FIGS. 19 and 21, the fourth portion 282 of the plunger 112C interfaces with the second portion 291 of the guide ring 127C in both the up position and the intermediate position along axis 114.

The interaction between these two portions can properly align the plunger 112C to the neck and guide rings 125, 127C. It is noted that the float feature described above can assist in properly aligning the plunger 112C with the guide ring 127C by allowing some limited floating motion of the plunger 112C in the X-Y plane that is orthogonal to the plunger actuation axis 114.

Accordingly, a method of forming a parison using a blow technique is also provided. The method may include transitioning, with the linear actuator unit 134, the plunger 112C to the first plunger position (see e.g. the left side of FIGS. 19 and 21) such that the first plunger seal surface 274 seals with the first guide seal surface 292. Thereafter a gob is inserted into the assembly and a blank mold such that the gob engages the neck ring 125 and the first portion 270 of the outer surface of the plunger 112C. This can, in some examples, but not all, form a mouth of the container in the gob/parison (e.g. a recessed region in the gob). Thereafter, the plunger 112C is transitioned to the blow plunger position without axially moving the second portion of the guide ring 127C relative to the neck ring 125. In this position, the second plunger seal surface 284 radially seals with the second guide seal surface 294. However, the first plunger seal surface 274 no longer seals with the first guide seal surface 292. With a flow path to the gob now created, air is supplied from the blow port 280 of the plunger 112C to distribute the glass of the gob to finish forming the parison.

Thereafter, in some examples, the plunger is retracted to a third retract position (the right side of FIG. 19) so that the neck ring 125 and guide ring 127C can clear the end of the plunger 112C as the neck ring 125, guide ring 127C and formed parison are transitioned out of the blank side of the forming machine 100 to the blow side of the forming machine.

In addition to using cooling fluid (air) in conjunction with the plunger 112 as outlined above, cooling of the linear actuator 140 may be provided. This is particularly beneficial when using an electric linear motor as such motors tend to have reduced cooling that for rotary electric motors.

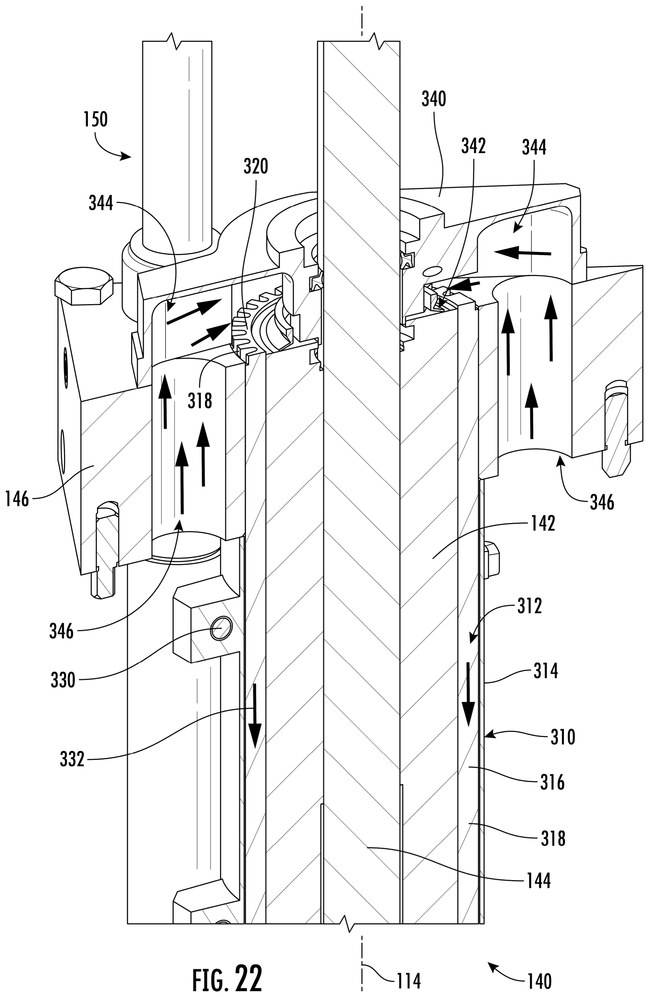

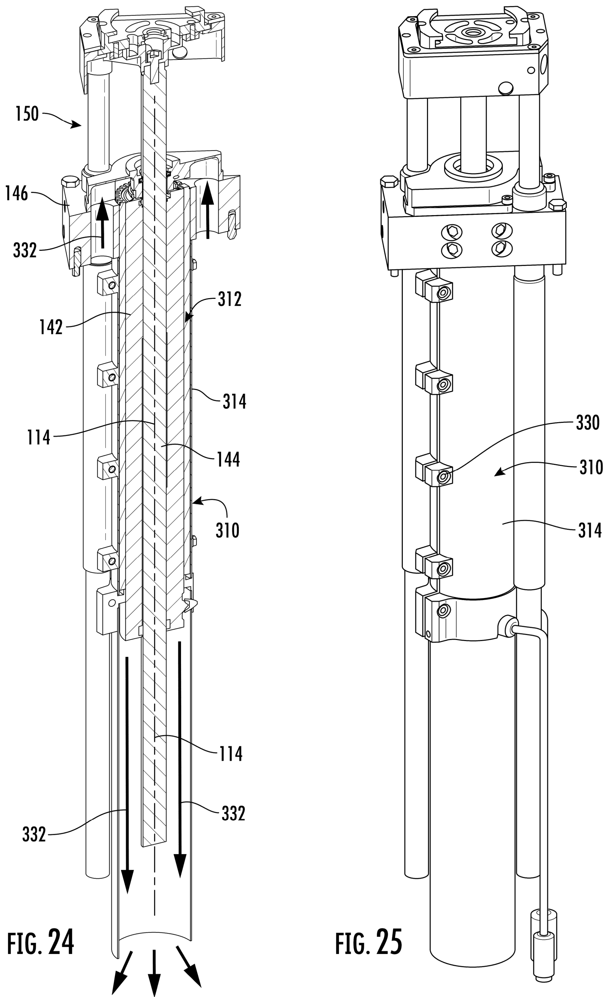

FIGS. 22-25 illustrate a cooling arrangement for cooling the linear actuator 140.

Here, a cooling sleeve 310 extends around, at least, the stator 142. The cooling sleeve 310 includes a clamping sleeve 314 and a heat transfer sleeve 316. A radial gap 312 is formed between the clamping sleeve 314 and the stator 142. The heat transfer sleeve 316 is located within the radial gap 312.

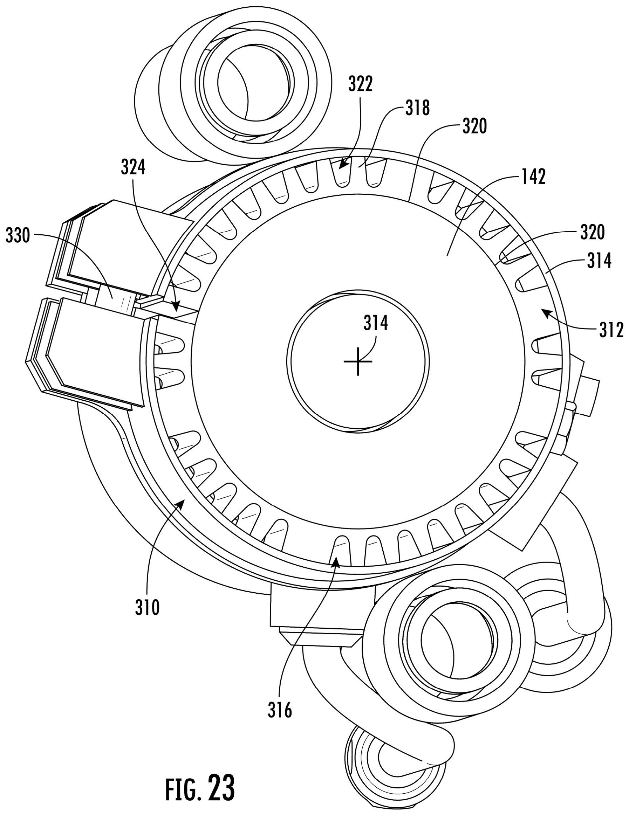

With principal reference to FIG. 23, the heat transfer sleeve 316 includes a plurality of fins 318 that extend radially from a main body 320. Here, the main body 320 is substantially cylindrical but may have a slit 324 formed therein such that the main body 320 is C-shaped. The slit 324 allows for the clamping sleeve 314 to clamp the heat transfer sleeve 316 around the stator 142 to provide for improved heat transfer therebetween.

Fluid flow channels in the form of air flow channels 322 are formed by the inner surface of the clamping sleeve 314 and the fins 318 and main body 320 of the heat transfer sleeve 316.

Similarly, the clamping sleeve 314 preferably is C-shaped such that it can be tightened around, at least, the heat transfer sleeve 316. This may be done by bolts/screws 330.

Preferably, air flow through the cooling sleeve 310 extends generally away from the carriage and plunger 112. This cooling air flow is illustrated by arrows 332.

Further, the exhausted cooling air is preferably vented remote from the blank molds and plunger 112.

Even more preferably, the cooling air is vented into duct 335 formed in bed 333 (see FIG. 1). Here, the hot exhausted cooling air can be isolated from the plungers 112, blank molds and other components of the forming machine 100.

In this example, machine frame 120 is mounted on top of bed 333. However, bed 333 may be considered to be part of or formed as part of machine frame 120 in other examples. Further, bed 333 may form part of a floor of the room in which the system is located.

With reference to FIG. 22, a cooling manifold 340 is attached proximate the upper end 342 of the stator 142/cooling sleeve 310 assembly and provides a fluid flow path 344 from inlets 346 formed in mounting block 146. Thus, the fluid flow path 344 fluidly connects the ends of air flow channels 322 with inlets 346.

While cooling air is illustrated as being drawn from the ambient air surrounding the plunger actuation units 134, cooling air supplies could be operably attached to air flow channels 322 directly and/or by way of inlets 346 in mounting block 146. In other examples, other fluid other than air can be passed through channels 322 for cooling purposes.

In this example, a portion of the axial length of the air flow channels 322 is defined, in part, by the mounting block 146. Further, the inlet ends of the air flow channels 322 are formed by the mounting block and the heat transfer sleeve 316.

In one example, but not all examples, the clamping sleeve 314 axially abuts the mounting block 146 and can be used to secure, at least from one side, the linear motor to the mounting block 146.

In this example, the cooling flow path for cooling the linear motor and linear actuator 140 is separate and independent of the fluid supplied to the plunger 112 as outlined above by way of guides 150, 160.

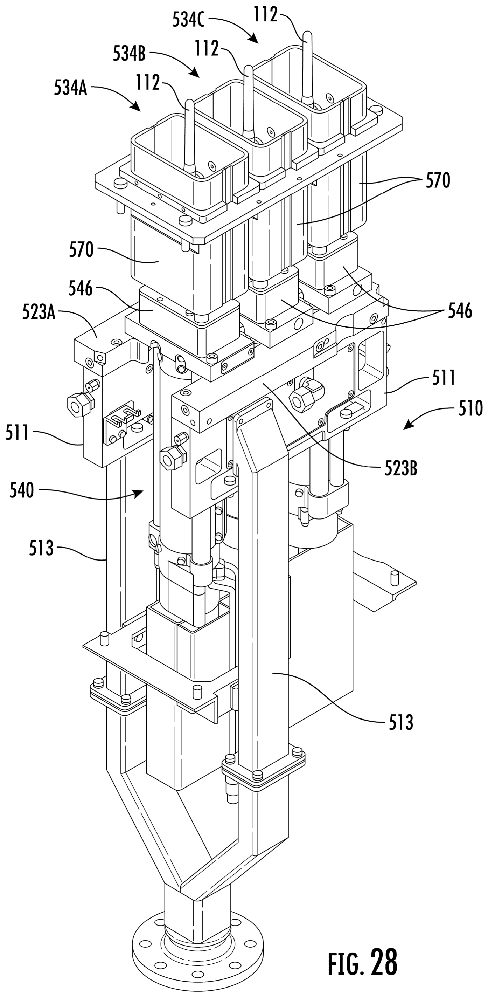

FIG. 28 illustrates a further example of a plunger actuation arrangement 510 mounted to a pair of mounting bases 511 (referred to as base 511A or 511B, when referred to specifically) of a machine frame to which the plunger actuation arrangement 510 is to be mounted. The machine frame can be similar to machine frame 120 discussed above. However, this plunger actuation arrangement 510 and associated plunger actuation units 534A, 534B, 534C have modified mounting, fluid flow configurations, and covers for the carriages 548.

In this example, the mounting bases 511 are parts of the main frame, such as machine frame 120 above, to which the plunger actuation arrangement 510 is operably mounted in a fixed position. Again, the plunger actuation arrangement 510 has the benefits of not needing the actuators thereof to be repositioned when switching between different neck ring arms such as arms 126, 128, 130 that have different positions P1, P2, P3 as outlined above.

However, in this example, the connections for various fluid flows such as the cooling fluid flows or plunger operation fluid flows can be made when operably mounting the plunger actuation units 534A, 534B, 534C.

In particular, the mounting bases 511 supply cooling air for cooling the linear actuators 540 as well as fluid supplied to the plungers 112 as outlined above.

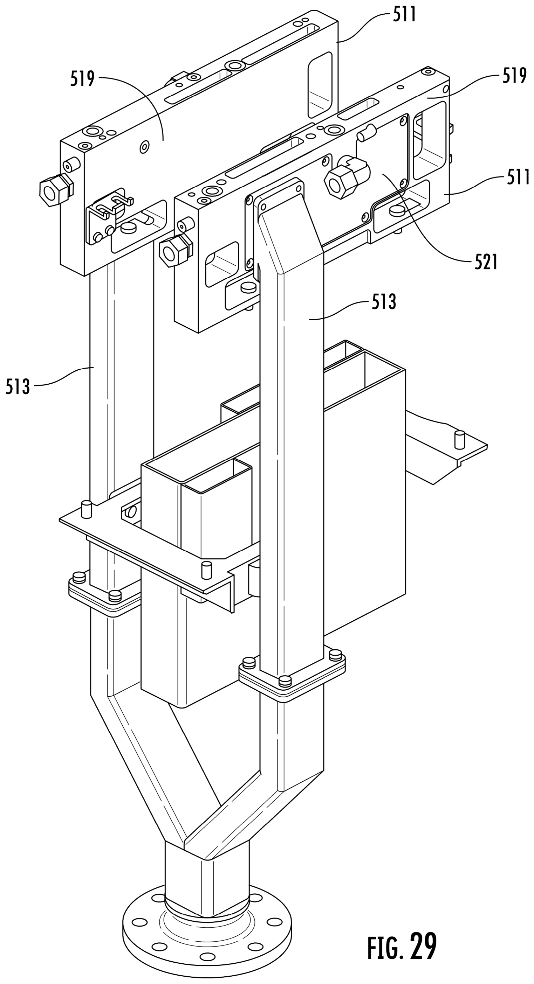

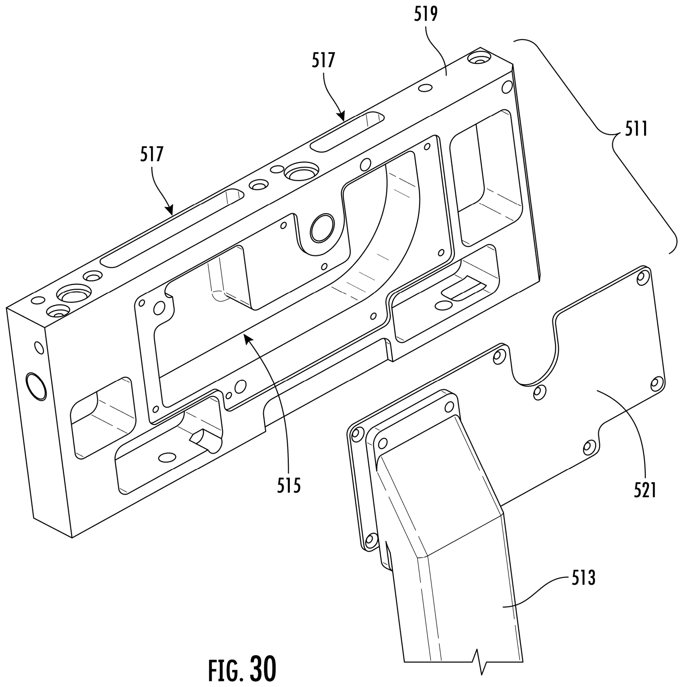

With reference to FIGS. 28-31, cooling fluid such as cooling air for cooling the stator 642 and slider 644 of linear actuators 540 is supplied to the mounting bases 511 by supply tubes 513. The mounting bases 511 have an internal cavity 515 that defines a manifold for distributing cooling air (see FIG. 30). In this example, each mounting base 511 has a pair of outlet ports 517. One outlet port would be associated with a corresponding one of the linear actuators 540. In the example of FIG. 28, only three plunger actuation units 534A, 534B, 534C are provided and thus only three linear actuators 540 are provided. In such a configuration, only three of the outlet ports 517 would operably be in use. Note, when fewer than four plunger actuation units are used, fewer outlet ports 517 would be used to supply cooling fluid such as linear actuator cooling air.

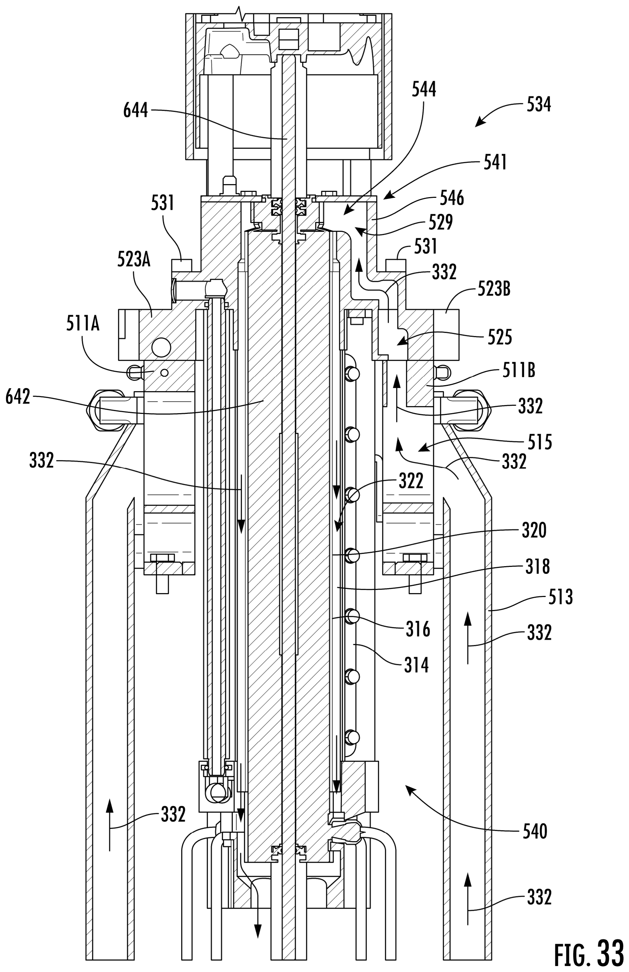

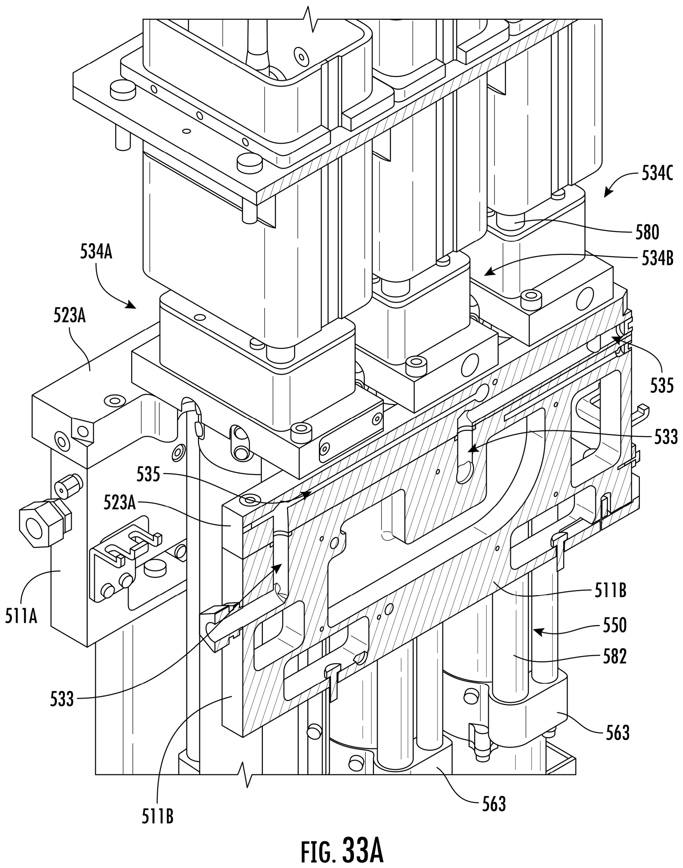

With principal reference to FIG. 30, the mounting base 511 includes a main body 519 and a cover plate 521 that when assembled define the internal cavity 515 that communicates cooling air (illustrated by arrows 332 in FIG. 33A) to outlet ports 517. The supply tubes 513 supply air to the internal cavity 515 through cover plate 521. However, alternative configurations are contemplated where the entire manifold is provided by the main body 519.

In this example, the system includes adaptor bars 523A, 523B that interface between the mounting bases 511A, 511B and the plunger actuation units 534A, 534B, 534C mounted thereto. The adaptor bars 523 may be specifically configured for the particular configuration of the system. In particular, in this example, only three plunger actuation units 534 are incorporated so the adaptor bars 523A, 523B are configured to interface with only three plunger actuation units 534.

As illustrated in FIG. 28, each plunger actuation unit 534 includes a mounting block 546, much like mounting blocks 146 above. As illustrated in FIG. 28 with reference to plunger actuation unit 534A, the mounting block 546 thereof extend laterally between and has opposed ends thereof mounted to corresponding ones of adaptor bars 523A, 532B. Thus, the adaptor bars 523A, 523B are operably mounted between the mounting blocks 546 and the machine frame and particularly the mounting bases 511 thereof.

In this example, the mounting blocks 546 are directly mechanically secured to the adaptor bars 523A, 523B.

The adaptor bars 523A, 523B include fluid flow paths 525 for conveying fluid for cooling the linear actuators 540. Because only three plunger actuation units 534 are used in this example, the adaptor bars 523A, 523B combine to provide only three such fluid flow paths 525.

The provided fluid flow paths 525 are operably fluidly coupled to corresponding ones of outlet ports 517. In particular, fluid flow paths 525 of adaptor bar 523A will be fluidly coupled to the pair of outlet ports 517 in mounting base 511A while the single fluid flow path 525 of adaptor bar 523B will be fluidly coupled to one of the outlet ports 517 in mounting base 511B. An imperforate region of 527 of adaptor bar 523B will close off one of the outlet ports 517 in mounting base 511B.

Notably, the ends of fluid flow paths 525 may be referred to as inlet and outlet ports accordingly.

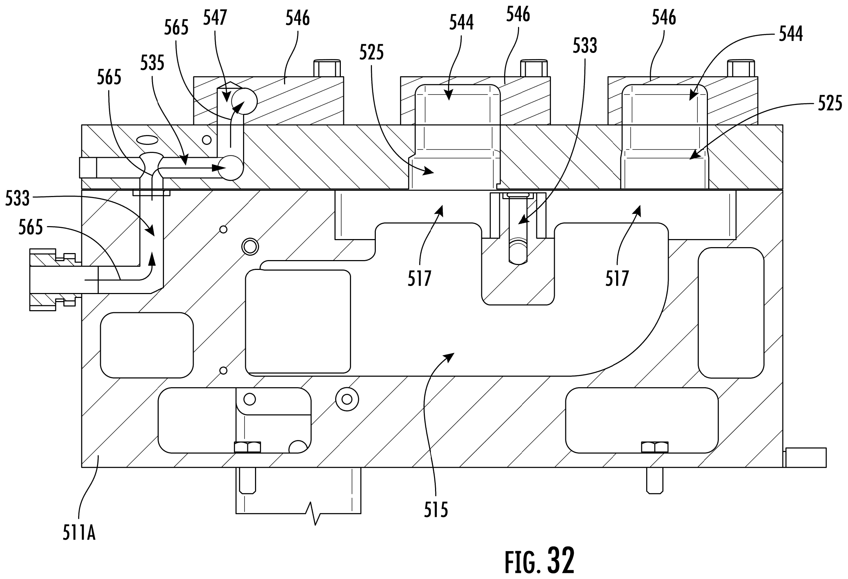

With reference to FIG. 32 and 33, the fluid flow paths 525 of the adaptor bars 523A, 523B, fluidly connect to corresponding fluid flow paths 529, 544 within the mounting blocks 546.

Similar to the prior example, the internal fluid flow paths 544 of the mounting blocks 546 provide, at least in part, a cooling air manifold 541 to the inlets of air flow channels 322 in the linear actuator 540. Like in the prior example, the air flow channels 322 may be formed by a clamping sleeve 314 and the fins 318 and main body 320 of the heat transfer sleeve 316.

In this example, when the mounting blocks 546 are positioned and secured to the corresponding adaptor bars 523A, 523B, such as by bolts 531 in FIG. 33, the flow path for supplying cooling air 332 to the linear actuator 540 is completed. Here, the user need not connect any manual connectors during this assembly step. Simply mounting the mounting blocks to the adaptor bars forms the fluid connection therebetween. This significantly reduces assembly time.

Supply tubes 513 may be piped to fresh air that is not affected by the heat generated by the system.

Notably, the fluid flow path of cooling air 322 in FIGS. 22-25 of the prior example may be equally applied to this example except that the cooling air is supplied to the mounting blocks 546 in a different manner, e.g. via the corresponding mounting base 511 and adaptor bar 523.

In addition to supplying the cooling fluid for the linear actuators 540, cooling and/or plunger operation fluid supplied to the carriage 548 of each plunger actuation unit 534A, 534B, 534C flows through the mounting bases 511A, 511B, the adaptor bars 523A, 523B, and the mounted mounting blocks 546. Again this fluid, typically air, can be used for cooling of the attached plungers 112 or for operation of the various components of the plunger assembly and/or performing blow steps during the parison formation process.

Cooling air supplied for cooling the linear actuators 540 may be supplied at lower pressure than air being supplied to the carriages 548. In some examples cooling air for cooling the stator of the linear actuator is supplied by a fan at between 8 and 16 kPa. However, in some instances, air supplied to the plunger, such as in a blow and blow system has compressed air supplied at between 150 and 400 kPa.

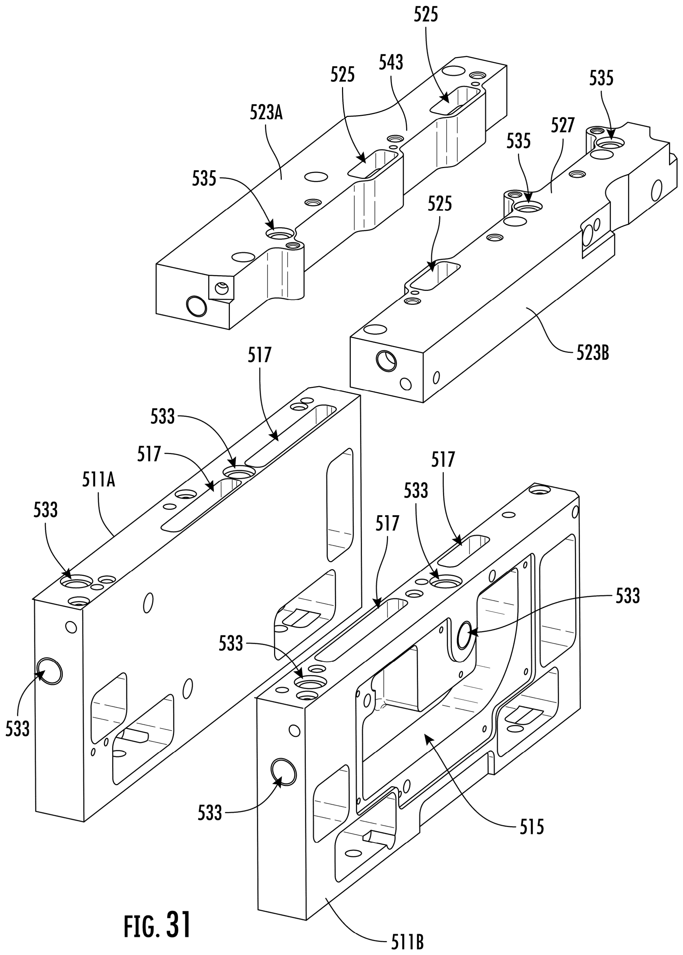

With reference to FIGS. 31-33, the mounting bases 511A, 511B have fluid flow paths in the form of plunger air flow paths 533 for supplying air that is supplied to the carriages 548 for operable use by the associated plungers 112.

FIG. 33 illustrates mounting base 511B and adaptor bar 523B in cross-section. Two plunger air flow paths 533 of mounting base 511B are illustrated therein.

With additional reference to FIGS. 31 and 33B adaptor bar 523B has two plunger air flow paths 535 fluidly connected to plunger air flow paths 533. In this example, the plunger air flow paths 535 of adaptor bar 523B supply air to plunger actuation units 534B and 534C.

While two plunger air flow paths 535 are provided by adaptor bar 523B, adaptor bar 523A only has a single plunger air flow path 535 that communicates with one of the two plunger air flow paths 533 of the mounting base 511A. In this example, the adaptor bar 523A has an imperforate region 543 that will otherwise seal the second plunger air flow path 533 of mounting base 511A.

In this example, the mounting blocks 546 include plunger air flow paths 547 (see e.g FIG. 32). Plunger air flow paths 547 are operably connected to plunger air flow paths 535. Again, when an user mounts the mounting blocks 546 on the adaptor bars 523A, 523B, the corresponding plunger air flow paths 535, 547 fluidly connect without requiring the user to manually connect connectors.

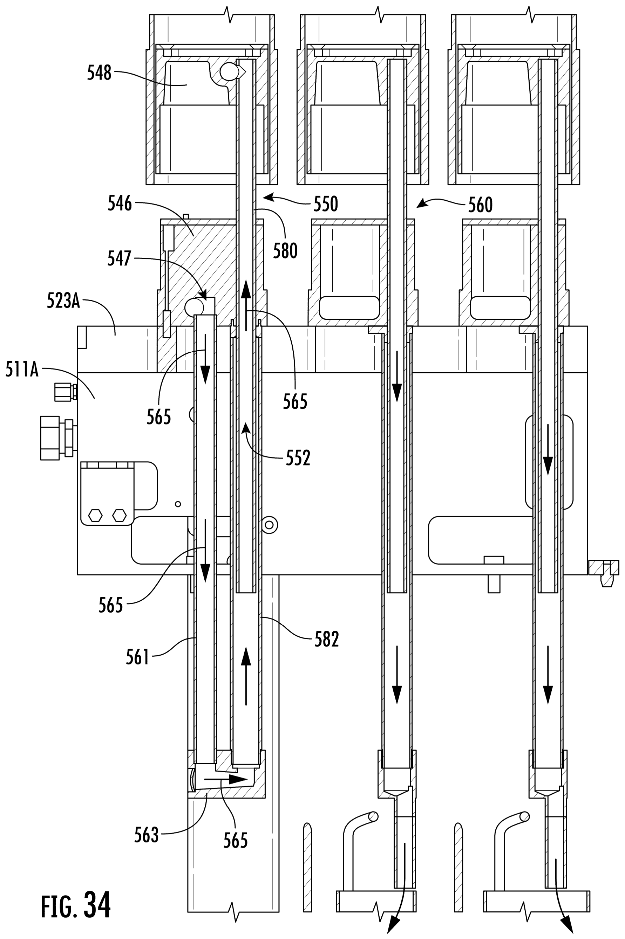

With reference to FIG. 34, in this example, like guide 150 in the prior example, guide 550 that guides linear motion of the carriage 548, defines a fluid flow path 552 for supplying fluid such as plunger air 565 to the carriage 548. However, unlike in the prior example, where fluid was directly supplied to guide 150, the fluid is supplied through one of mounting bases 511A, 511B, one of the adaptor bars 523A, 523B as well as through the corresponding mounting block 546 of the corresponding plunger actuation unit 534A, 534B, 534C.

To accommodate the telescopic configuration of guide 550 and particularly the length of first member 580 relative to second member 582, the first guide 550, at least in the retracted position, extends on both sides of the mounting block 546. Similar to guide 150, first member 580 is telescopically slidably received by second member 582. Each of the first and second members 580, 582 defines a part of the first flow path 552 of the first guide 550. The first member 580 is operably sealed to the second member 582, such as by a gasket or o-ring.

To accommodate the length, a connecting tube 561 extends away from the mounting block 546 on a side thereof opposite the carriage 548. The connecting tube 561 has an end member 563 that is fluidly operably connected to second member 582 of the first guide 550.

The first member 580 of first guide 550 is operably connected to the carriage 548 in a same manner as guide 150 outlined above.

Thus, the fluid flow path 552 provided by the first guide is operably connected to a source of fluid by way of the flow path 533 defined by the mounting base 511, the flow path 535 defined by the adaptor bar 523, the flow path 547 defined by the mounting block 546, and the flow path defined by the connecting tube 561.

Other examples are contemplated that do not incorporate the connecting tube 561.

While the mounting bases 511 are disclosed as having a single central cavity 515 that supplies air to both outlet ports 517 thereof, it is desirable to keep the flow paths 533 for the plunger air separate. This allows for individual flow control of the plunger fluid to the individual plungers carriages 548 and associated plungers 112. This may be beneficial if different amounts of cooling or operating air pressure is required for the different plungers 112 in the section. This could occur because the different plunger actuation units 534 could experience different temperatures due to the position within the section or different types of glass containers are being formed.

Air supplied to the carriage 546 and plunger 112 is exhausted in the same manner as in the prior embodiment, such as through second guides 560.

Notably, seals such as o-rings or gaskets may be provided at all of the interfaces between the mounting bases 511, adaptor bars 523 and mounting blocks 546. Again, as noted above, none of these connections need a user to manually connect the flow paths, such as like hose connectors. Instead, the user simply assembles the adaptor bars 523 on to the corresponding mounting base 511 and assembles the mounting blocks 546 of the desired plunger actuation units 534, to operably form the fluid flow paths for supplying air to the carriages 548 and ultimately the plungers 112.

Here, the adaptor bars 523A, 523B are configured depending on the ultimate configuration of the system. More particularly, the adaptor bars 523A, 523B may have more or less flow paths for communicating linear actuator cooling fluid and/or plunger fluid to the selected number of plunger actuation units 534.

Advantageously, the adaptor bars 523 are located within the room housing the plunger actuation units 534 such that the fluid connections need not be made in a room below/remote from the system. This allows for efficient and timely reconfiguration of the system for forming different numbers of parisons by increasing or decreasing the number of plunger actuation units (typically between one (1) and four (4) plunger actuation units).

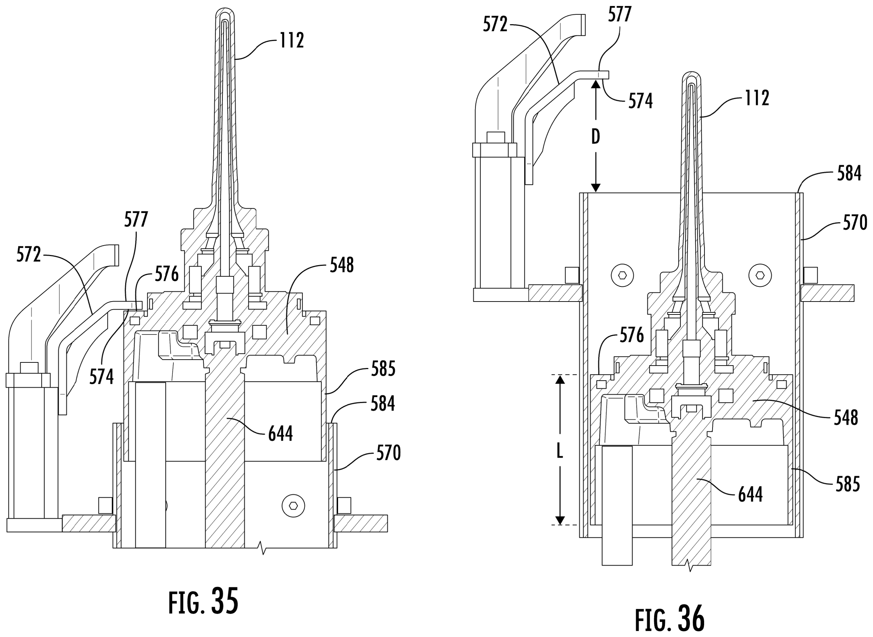

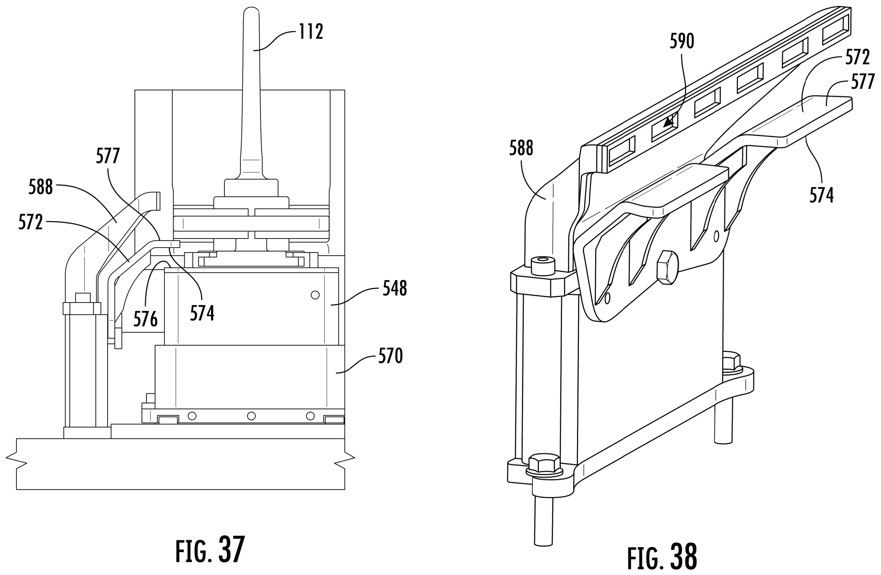

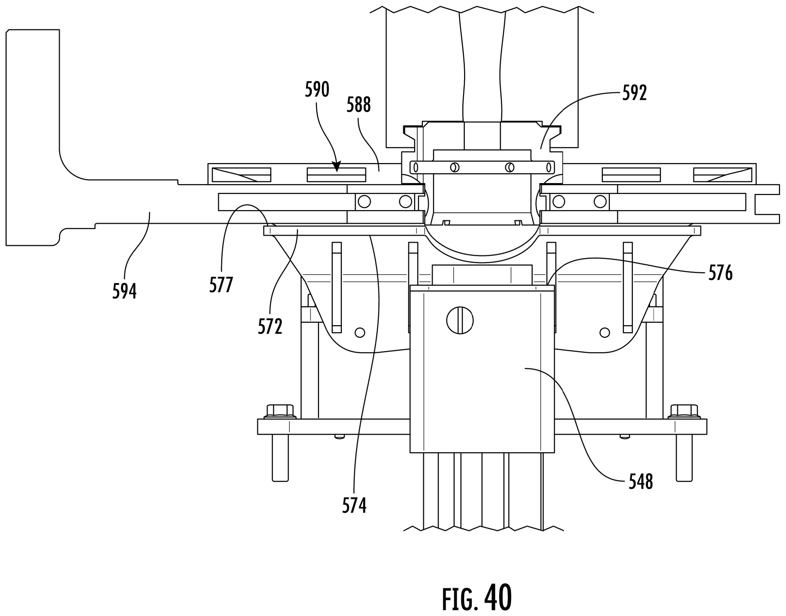

With reference to FIGS. 28 and 35-40, the carriages 548 of this example are carried in carriage sleeves 570. The carriages 548 have a cross-sectional shape and size that corresponds to the inner periphery of the carriage sleeves 570. This helps prevent debris from passing between the carriage 548 and the corresponding carriage sleeve 570.

To prevent ejecting the carriage 548 from the carriage sleeve 570, a carriage hard stop 572 is operably secured to the machine frame. The carriage hard stop 572 includes an abutment 574 that faces a corresponding abutment surface 576 of the carriage 548. The abutment 574 of the carriage hard stop 572 extends into the path of the carriage 548 limiting the axial displacement of the carriage 548 along the plunger actuation axis.

The carriage 548 has an axial length L between an end 575 thereof and the abutment surface 576 that is greater than a distance D between the end 584 of the carriage sleeve 570 and the abutment 574.

In this example, the carriage has a skirt portion 585 that keeps the carriage 548 located within carriage sleeve 570 when the carriage 548 is fully extended at all invert heights P1, P2, P3.

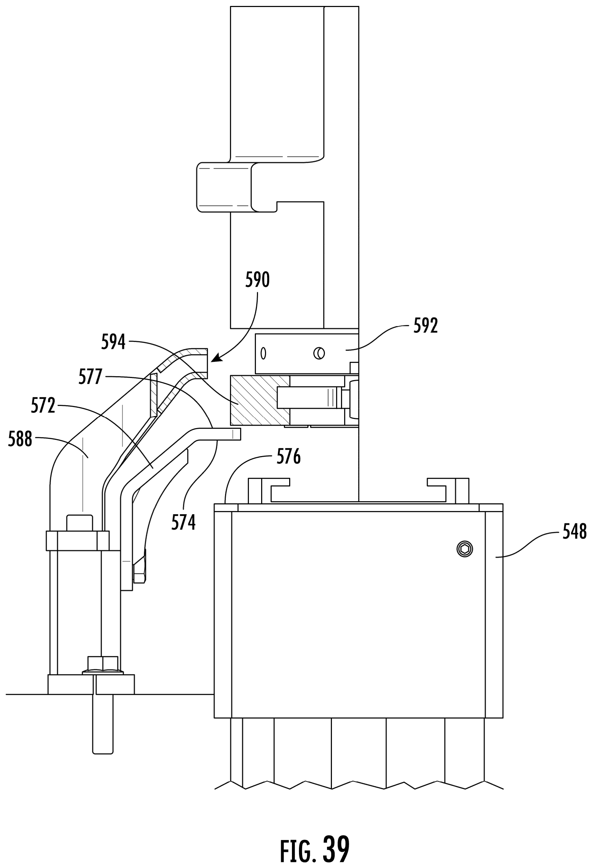

In addition to the carriage hard stop 572, a neck ring cooler 588 is provided. The neck ring cooler 588 has at least one fluid exit port 590 through which cooling fluid, typically air, is dispensed. This cooling air is directed at the neck rings 592 (only one of which is illustrated in FIGS. 39 and 4) carried by the neck ring arm(s) 594 that are attached to the invert when the invert is in the blank mold position.

In this example, the exit ports 590 of the neck ring cooler 588 are axially offset from side 577 of the carriage hard stop 572 that is opposite abutment 574 and aimed at the neck rings 592.

In addition to preventing ejection of the carriage 548, the side 577 of the carriage hard stop 572 may be used as a reference surface for calibrating the position of the neck ring arm 594 relative to the actuation arrangement and particularly the carriages 548 thereof. Calibration may be performed by confirming that the neck ring arms 594 are substantially parallel to side 577 of the carriage hard stop 572. Typically, this will be done when a minimal gap is formed between side 577 of the carriage hard stop 572 and the adjacent side of the neck ring arm 594. Substantially parallel shall be less than 5 degrees. However, it is more preferably less than 1 degree from parallel.

In one method of calibrating, the gap between the neck ring arm 594 and the side 577 of the carriage hard stop 572 is less than 2 mm and preferably approximately 1.6mm while parallelism is analyzed. Preferably, there is no greater than 5% difference in the vertical gap when measured at different locations along side 577 and preferably no greater than 1%.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

Various aspects and embodiments of the invention are also summarized in the following numbered clauses:
Clause 1. A parison plunger actuation arrangement comprising:
   a carriage configured to carry a plunger for use in forming a parison from a gob, the carriage having a first fluid flow port; and
   a first guide connected to the carriage for guiding motion of the carriage parallel to a plunger actuation axis, the first guide defining a fluid flow path, the fluid flow path fluidly coupled to the first fluid flow port;
   a linear actuator coupled to the carriage configured to drive the carriage parallel to the plunger actuation axis.
Clause 2. The parison plunger actuation arrangement of Clause 1, wherein the first guide has a first tubular member and a second tubular member operably slidable relative to the first tubular member parallel to the plunger actuation axis to adjust an axial length of the first guide, the first and second tubular members forming at least part of the fluid flow path of the first guide.
Clause 3. The parison plunger actuation arrangement of Clause 2, wherein the first or second tubular member is telescopically received in the second or first tubular member, respectively.
Clause 4. The parison plunger actuation arrangement of any one of Clauses 2 or 3, wherein the first tubular member is operably sealingly connected to the second tubular member.
Clause 5. The parison plunger actuation arrangement of any one of Clauses 2-4, wherein:
   the linear actuator includes a mounting block, the carriage movable relative to the mounting block, the mounting block having a mounting block plunger fluid flow path; and
   the fluid flow path of the first guide operably fluidly coupled to the mounting block plunger fluid flow path by a connecting tube connected to the mounting block and fluidly connected to and interposed between the mounting block plunger fluid flow path and the fluid flow path of the first guide.
Clause 6. The parison plunger actuation arrangement of Clause 5, wherein
   the carriage is on a first side of the mounting block;
   the connecting tube is on a second side of the mounting block;
   the first tubular member is operably connected to the carriage and travels with the carriage when the carriage moves along the plunger actuation axis;
   the second tubular member extends, at least in part, on the second side of the mounting block and connects to the connecting tube on the second side of the mounting block to operably fluidly connect the mounting block plunger fluid flow path to the fluid flow path of the guide.
Clause 7. The parison plunger actuation arrangement of any one of Clauses 5-6, wherein the guide is mounted to the mounting block such that a least a portion extends through the mounting block such that at least a portion of the fluid flow path of the first guide extends through the mounting block.
Clause 8. The parison plunger actuation arrangement of Clauses 2 through 4, wherein the first guide includes a third tubular member slidable relative to the first and second tubular members, the third tubular member forming at least part of the fluid flow path of the first guide and operably fluidly connecting the portion of the first fluid flow path provided by the first tubular member with the portion of the first fluid flow path provided by the second tubular member.
Clause 9. The parison plunger actuation arrangement of Clause 8, wherein the first, second and third tubular members are telescopically interconnected.
Clause 10. The parison plunger actuation arrangement of any one of Clauses 1-8, further comprising a second guide connected to the carriage for guiding motion of the carriage parallel to the plunger actuation axis, the second guide defining a second flow path, the carriage having a second fluid flow port, the second flow path fluidly coupled to the second fluid flow port.
Clause 11. The parison plunger actuation arrangement of any one of Clauses 2-10, further comprising a plunger operably attached to the carriage, the plunger having an internal plunger fluid flow path operably connected to the first and second fluid flow ports, the plunger fluid flow path fluidly connecting the first fluid flow port to the second fluid flow port such that a continuous fluid flow path is formed by the first guide, second guide and the plunger.
Clause 12. The parison plunger actuation arrangement of any one of Clauses 1-9, comprising a plunger operably attached to the carriage, the plunger having an internal fluid flow path extending between a first port and a second port, the first port connecting to the first fluid flow port of the carriage, the internal fluid flow path connecting the second port of the plunger with the first port and the first fluid flow port of the carriage.
Clause 13. The parison plunger actuation arrangement of Clause 12, wherein the plunger is a plunger for use in forming a parison using a blowing technique rather than the pressing technique, the fluid used for forming the parison during the blowing technique exiting the plunger through the second port.
Clause 14. The parison plunger actuation arrangement of Clause 11, wherein the plunger is a plunger for use in forming a parison using a pressing technique and fluid flow through the internal plunger fluid flow path is used to cool the plunger.
Clause 15. The parison plunger actuation arrangement of any one of Clauses 1-4 and 8-14, wherein:
   the linear actuator includes a mounting block, the carriage movable relative to the mounting block, the mounting block having a mounting block plunger fluid flow path; and
   the fluid flow path of the first guide operably fluidly coupled to the mounting block plunger fluid flow path.
Clause 16. The parison plunger actuation arrangement of any one of Clauses 1-15, further comprising a source of air, the source of air operably coupled to the first fluid flow path formed by the first guide, when in operation, fluid from the source of air flows through the first fluid flow path from the source of air to the first fluid port.
Clause 17. The parison plunger actuation arrangement of any one of Clauses 1-16, wherein the first guide provides lateral support of the carriage in a plane perpendicular to the plunger actuation axis.
Clause 18. The parison plunger actuation arrangement of any one of Clauses 1-17, wherein the first guide is not a electro mechanical actuator, pneumatic actuator, or a hydraulic actuator.
Clause 19. The parison plunger actuation arrangement of any one of Clauses 1-18, wherein the linear actuator is a linear motor having a stator and a slider movable relative to the stator, the slider being free of any fluid flow therethrough for cooling of a plunger or for providing fluid pressure for a blow technique for forming a parison.
Clause 20. A parison formation system comprising:
   a machine frame including a mounting base, the mounting base including a first mounting base plunger fluid flow path;
   a first parison plunger actuation arrangement of any one of Clauses 5-7 or 15;
   an adaptor bar mechanically interposed between the mounting block of the linear actuator and the mounting base of the machine frame for operably fixedly mounting the mounting block in a fixed position to the machine frame, the adaptor bar having a first adaptor bar plunger fluid flow path therethrough, the first adaptor bar plunger fluid flow path fluidly connecting the first mounting base plunger fluid flow path with first mounting block plunger fluid flow path.
Clause 21. The parison formation system of Clause 20, wherein:
   the mounting block has a first mounting block plunger fluid inlet port for the mounting block plunger fluid flow path;
   the adaptor bar has a first adaptor bar outlet port for the adaptor bar plunger fluid flow path;
   the first mounting block plunger fluid inlet port and the first adaptor bar outlet port connected to one another when the mounting block is affixed to the adaptor bar when the linear actuator is mounted to the machine frame.
Clause 22. The parison formation system of Clause 21, wherein the first mounting block plunger fluid inlet port and the first adaptor bar outlet port are operably configured to sealingly mate with one another when the mounting block is mounted to the adaptor bar.
Clause 23. The parison formation system of any one of Clauses 20-21, further comprising a source of air, the source of air operably coupled to the mounting base plunger fluid flow path, when in operation, fluid from the source of air flows through the mounting base plunger fluid flow path, the adaptor bar plunger fluid flow path, the mounting block plunger fluid flow path, and fluid flow path of the first guide when flowing to the carriage.
Clause 24. A method of assembling a parison formation system of any one Clauses 20-23, the method comprising:
   mounting adaptor bar to the mounting base such that the first mounting base plunger fluid flow path is fluidly connected to the first adaptor bar plunger fluid flow path; and
   mounting the mounting block to the adaptor bar such that the first mounting block plunger fluid flow path is in fluid communication with the first adaptor bar plunger fluid flow path.
Clause 25. The method of Clause 24, wherein:
   the step of mounting the mounting block to the adaptor bar simultaneously mechanically engages the mounting block to the adaptor bar and fluidly connects the first adaptor bar plunger fluid flow path with the first mounting block plunger fluid flow path.
Clause 26. The parison formation system of any one of Clauses 20-22, comprising a second plunger actuation arrangement;
   wherein:
   the mounting base includes a second mounting base plunger fluid flow path that is independent of the first mounting base plunger fluid flow path;
   the adaptor bar is mechanically interposed between the mounting block of the linear actuator of the second plunger actuation arrangement and the mounting base of the machine frame for operably fixedly mounting the mounting block of the second plunger actuation arrangement in a fixed position to the machine frame, the adaptor bar having a second adaptor bar plunger fluid flow path therethrough that is separate from the first adaptor bar plunger fluid flow path, the second adaptor bar plunger fluid flow path fluidly connecting the second mounting base plunger fluid flow path with the mounting block plunger fluid flow path of the second plunger actuation arrangement.
Clause 27. A parison plunger actuation arrangement for use in a machine frame, the machine frame including an invert to transition a parison from a blank mold to a blow mold by pivoting about an invert axis, the parison plunger actuation arrangement comprising:
   a carriage configured to carry a plunger for use in forming a parison from a gob, the carriage configured to move parallel to a plunger actuation axis, the plunger actuation axis being generally parallel to gravity and perpendicular to the invert axis; and
   a linear actuator coupled to the carriage configured to drive the carriage parallel to the plunger actuation axis;
   the carriage having at least 200 mm of travel parallel to the plunger actuation axis,
   wherein the parison plunger actuation arrangement is optionally in accordance with any one of Clauses 1-19.
Clause 28. The parison plunger actuation arrangement of Clause 16, wherein the carriage has at least 205 mm, more preferably 210 mm, more preferably 215 mm and even more preferably 220 mm of travel parallel to the plunger actuation axis.
Clause 29. The parison plunger actuation arrangement of any one of Clauses 27 or 28, wherein:
   a) the linear actuator includes a mounting block for attaching the linear actuator to the machine frame;
   b) the linear actuator includes a stator and a slider, the stator being in a fixed position relative to the mounting block during operation, the slider being moveable parallel to the plunger actuation axis to drive the carriage parallel to the plunger actuation axis.
Clause 30. The parison plunger actuation arrangement of Clause 29, wherein the slider has at least 200 mm of travel parallel to the plunger actuation axis relative to the stator.
Clause 31. The parison plunger actuation arrangement of Clause any one of Clauses 27-30, wherein the linear actuator is a linear motor.
Clause 32. The parison plunger actuation arrangement of any one of Clauses 27-31, wherein the arrangement is free of alternative mounting locations relative to the machine frame.
Clause 33. The parison plunger actuation arrangement of any one of Clauses 27-32, wherein the arrangement is free of a linear actuation position adjustment system for adjusting a position of the linear actuator relative to the machine frame such that the linear actuator may not be mounted in different vertical positions relative to the machine frame in use.
Clause 34. The parison plunger actuation arrangement of any one of Clauses 27-33, wherein the arrangement is free of a plunger vertical position adjustment system in the form of a positioning linear actuator positioned mechanically between the linear actuator that drives the carriage and linear actuator vertically relative to the machine frame.
Clause 35. A parison formation system including:
   a machine frame;
   a parison plunger actuation arrangement of any one of Clauses 27-34, having the mounting block attached to the machine frame, the carriage having the full at least 200 mm, preferably 205 mm, more preferably 210 mm, more preferably 215 mm and even more preferably 220 mm of travel parallel to the plunger actuation axis without requiring changing the vertical position of the mounting block relative to the machine frame.
Clause 36. The parison formation system of Clause 35, further comprising:
   an invert attached to the machine frame, the invert defining an invert axis about which the invert rotates between a blank side position and a blow side position;
   a first neck ring arm attachable to the invert and a second neck ring arm attachable to the invert, the first neck ring arm, when attached to the invert, associated with a first blank mold position along the plunger actuation axis when the invert is in the blank side position, the second neck ring arm, when attached to the invert, associated with a second blank mold position along the plunger actuation axis when the invert is in the blank side position, the second blank mold position being different than the first blank mold position.
Clause 37. The parison formation system of Clause 36, wherein the first blank mold position is offset from the second blank mold position by at least 25 mm, more preferably 35 mm, more preferably 45 mm, more preferably 55 mm, and even more preferably 70 mm.
Clause 38. The parison formation system of Clause 37, wherein the mounting block is attached to the machine frame in the same vertical location when the first neck ring arm is used and when the second neck ring arm is used.
Clause 39. A method of forming first and second parisons using the parison formation system of any one of Clauses 36-38, the method comprising:
   a) positioning the invert in the blank side position with the first neck ring arm attached to the invert to position the first neck ring arm adjacent the parison plunger arrangement in the first blank mold position, with the mounting block of the parison plunger arrangement attached to the machine frame in a first position;
   b) forming a first parison using a first blank mold and the first neck ring arm;
   c) transitioning the first parison away from the parison plunger arrangement by transitioning the invert to the blow side position;
   d) positioning the invert in the blank side position with the second neck ring arm attached to the invert to position the second neck ring arm adjacent the parison plunger arrangement in the second blank mold position, with the mounting block of the parison plunger arrangement attached to the machine frame in the first position; and
   e) forming a second parison using a second blank mold and the second neck ring arm.
Clause 40. The method of Clause 39, wherein the first blank mold position is offset from the second blank mold position by at least 25 mm, more preferably 35 mm, more preferably 45 mm, more preferably 55 mm, and even more preferably 70 mm.
Clause 41. A parison plunger actuation arrangement comprising:
   a carriage having a base and a plunger attachment adaptor holder coupled to the base, the plunger attachment adaptor holder configured to operably releasably mount a plunger thereto, the plunger attachment adaptor holder mounted to the base such that the plunger attachment adaptor holder can float within a float plane relative to the base;
   a linear actuator coupled to the carriage configured to drive the carriage parallel to a plunger actuation axis, the float plane being orthogonal to the plunger actuation axis,
   wherein the parison plunger actuation arrangement is optionally in accordance with any one of Clauses 1 - 19 or 27-34.
Clause 42. The parison plunger actuation arrangement of Clause 41, wherein the plunger attachment adaptor includes a plunger mounting region, the plunger mounting region having first and second flow ports, the first and second flow ports in fluid communication with first and second fluid flow paths formed in the base.
Clause 43. The parison plunger actuation arrangement of any one of Clauses 41-42, wherein the plunger attachment adaptor includes:
   i) a plunger mounting region;
   ii) a mounting flange;
   further comprising an attachment plate securing the plunger attachment adaptor holder to the base, the attachment plate having a mounting aperture therethrough providing access to the plunger mounting region for selectively attaching a plunger to or removing a plunger from the plunger attachment adaptor holder.
Clause 44. The parison plunger actuation arrangement of Clause 43, wherein the mounting flange of the plunger attachment adaptor holder is located axially between the attachment plate and the base.
Clause 45. The parison plunger actuation arrangement of any one of Clauses 43-44, wherein the base includes a mounting recess, the mounting flange of the plunger attachment adaptor holder being located within the mounting recess, the mounting recess being sized larger than the mounting flange to provide clearance therebetween within the float plane.
Clause 46. The parison plunger actuation arrangement of any one of Clauses 43-45, wherein the attachment plate extends over the mounting flange preventing removal of the plunger attachment adaptor holder from the base.
Clause 47. The parison plunger actuation arrangement of any one of Clauses 41-46, wherein:
   the plunger attachment adaptor holder includes a main body, a first retainer and a second retainer laterally spaced from the first retainer, the first and second retainers being attached to the main body;
   the first retainer having a first offset leg extending outward from the main body parallel to the plunger actuation axis and a first inward extending flange extending from the first offset leg towards the second retainer, a first gap being formed axially between the first inward extending flange and the main body;
   the second retainer having a second offset leg extending outward from the main body parallel to the plunger actuation axis and a second inward extending flange extending from the second offset leg towards the first retainer, a second gap being formed axially between the inward extending flange and the main body;
   a resilient retainer extending outward from the main body, the resilient retainer resiliently depressible into a cavity within the main body.
Clause 48. The parison plunger actuation arrangement of Clause 47, wherein the resilient retainer is located laterally between the first and second retainers.
Clause 49. A parison plunger actuation arrangement comprising:
   a carriage having a plunger attachment adaptor holder, the plunger attachment adaptor holder configured to releasably mount a plunger thereto, the plunger attachment adaptor holder includes a plunger mounting region, the mounting region, defined in part, between first and second retainers, the first and second retainers being laterally spaced apart, the first retainer having a first offset leg extending outward from a main body parallel to a plunger actuation axis and a first inward extending flange extending from the first offset leg towards the second retainer, a first gap being formed axially between the first inward extending flange and the main body;
   the second retainer having a second offset leg extending outward from the main body parallel to the plunger actuation axis and a second inward extending flange extending from the second offset leg towards the first retainer, a second gap being formed axially between the inward extending flange and the main body;
   a resilient retainer extending outward from the main body, the resilient retainer resiliently depressible into a cavity within the main body; and
   a linear actuator coupled to the carriage configured to drive the carriage parallel to the plunger actuation axis,
   wherein the parison plunger actuation arrangement is optionally in accordance with any one of Clauses 1 - 19, 27 - 34 or 41-48.
Clause 50. The parison plunger actuation arrangement of Clause 49, wherein a first inner surface of the first offset leg is curved, and a second inner surface of the second offset leg is curved, the curves of the first and second offset legs being segments of a circle.
Clause 51. The parison plunger actuation arrangement of any one of Clauses 49-50, further comprising a plunger attached to a plunger adaptor, the plunger adaptor having opposed first and second mounting flanges extending radially outward and away from one another, the first and second flanges being angularly receivable into the first and second gaps upon rotation of the plunger adaptor 90 degrees about the plunger actuation axis from an insertion/removal orientation to a mounted orientation.
Clause 52. The parison plunger actuation arrangement of Clause 51, further comprising a resilient retainer carried by the main body, the resilient retainer resiliently depressible into a cavity in the main body when the plunger adaptor transitions from the insertion/removal orientation to the mounted orientation, the resilient retainer extending outward from the main body and into a cavity in the plunger when the plunger is in the mounted orientation relative to the plunger attachment adaptor holder.
Clause 53. The parison plunger actuation arrangement of Clause 52, wherein the resilient retainer is resiliently depressible into the cavity in the main body parallel to the plunger actuation axis.
Clause 54. The parison plunger actuation arrangement of Clause 51, wherein the plunger adaptor has a length defined by the outer most ends of the first and second mounting flanges and a width defined perpendicular to the length, the length being greater than the width.
Clause 55. A blow style parison formation assembly comprising:
   a linear actuator;
   a blow style plunger operably attached to the linear actuator, the linear actuator configured to drive the plunger parallel to a plunger actuation axis, the plunger having a plunger body having a radially outer surface, the outer surface having:
      a) a first portion configured for forming part of the finish region of the parison;
      b) a second portion positioned radially outward from the first portion having a first plunger seal surface;
      c) a third portion positioned radially outward of the first portion and axially offset from the second portion away from the first portion, the third portion having a blow port formed therein, the blow port configured for dispensing fluid flow for forming the parison during a blow phase;
      d) a fourth portion positioned radially outward of the second portion, the fourth portion providing a radially outward directed second plunger seal surface;
   a neck ring having a radially inner surface portion configured to form a portion of the finish of a parison;
   a guide ring attached to the neck ring in a fixed axial position relative to the neck ring when the plunger transitions from a first plunger position relative to the plunger actuation axis in which a gob is loaded into an associated blank mold and a second plunger position relative to the plunger actuation axis when a fluid is blown out of the blow port during a blow phase of forming the parison using a blow technique, the guide ring having a radially inner surface, the radially inner surface having:
      a) a first portion having a first guide seal surface configured to seal with the first plunger seal surface when the plunger is in the first plunger position;
      b) a second portion defining a second guide seal surface configured to seal with the second plunger seal surface when the plunger is in the second plunger position.
Clause 56. The blow style parison formation assembly of Clause 55, wherein
   i) for the outer surface:
      a) the first portion of the outer surface has a first outer diameter;
      b) the second portion of the outer surface has a second outer diameter, greater than the first outer diameter;
      c) the fourth portion of the outer surface has a third outer diameter greater than the second outer diameter;
   ii) for the radially inner surface:
      a) the first portion of the radially inner surface has a first inner diameter; and
      b) the second portion of the radially inner surface has a second inner diameter greater than the first diameter.
Clause 57. The blow style parison formation assembly of any one of Clauses 55-56, wherein in the second plunger position, the first, second and third portions of the outer surface do not sealingly contact the radially inner surface of the guide ring such that fluid exiting the blow port can flow past the first, second and third portions of the outer surface and the first portion of the guide ring toward the neck ring.
Clause 58. The blow style parison formation assembly of any one of Clauses 55-57, wherein the guide ring includes a third portion that forms part of the finish of the parison, the third portion of the guide ring.
Clause 59. The blow style parison formation assembly of Clause 55 to 58, wherein the second inner diameter is greater than the second outer diameter.
Clause 60. The blow style parison formation assembly of any one of Clauses 55-59, wherein the fourth portion of the outer surface radially interfaces with the second portion of the radially inner surface during both the first and second plunger positions.
Clause 61. The blow style parison formation assembly of Clause 60, wherein the plunger is disengaged from the guide ring when the plunger is in a third plunger position relative to the plunger actuation axis, the second plunger position being axially between the first and third plunger positions relative to the plunger actuation axis.
Clause 62. The blow style parison formation assembly of Clause 61, wherein the third plunger position is when the neck ring is moved into registration with the plunger to form a new parison or moved out of registration with the plunger after a parison has been formed and is being transitioned away from the plunger.
Clause 63. The blow style parison formation assembly of any one of Clauses 55-62, wherein a connection between the plunger and the linear actuator is free of any spring members such that the transition of the plunger from the first plunger position to the second plunger position is due solely to forces generated by actuation of the linear actuator and not due to any spring members.
Clause 64. A method of forming a parison using the blow style parison formation assembly of any one of Clauses 44-63, the method including:
   transitioning, with the linear actuator, the plunger to the first plunger position such that the first plunger seal surface seals with the first guide seal surface;
   inserting a gob into the assembly such that the gob engages the neck ring and the first portion of the outer surface of the plunger;
   transitioning the plunger to the second plunger position without axially moving the second portion of the guide ring relative to the neck ring such that the second plunger seal surface radially seals with the second guide seal surface but the first plunger seal surface no longer seals with the first guide seal surface; and
   supplying air from the blow port of the plunger to blow the gob to form the parison.
Clause 65. The method of Clause 64, wherein a connection between the plunger and the linear actuator is free of any spring members such that transitioning the plunger from the first plunger position to the second plunger position is due solely to forces generated by actuation of the linear actuator and not due to any spring members.
Clause 66. A parison formation system including:
   a machine frame;
   an invert fixedly attached to the machine frame for rotational motion about an invert axis to transition a formed parison from a blank mold to a blow mold by pivoting about the invert axis;
   a carriage configured to carry a plunger for use in forming a parison from a gob, the carriage configured to move parallel to a plunger actuation axis, the plunger actuation axis being generally parallel to gravity and perpendicular to the invert axis;
   a linear actuator coupled to the carriage configured to drive the carriage parallel to the plunger actuation axis, the linear actuator having a stator and a slider, the stator being operably fixedly attachable to the machine frame in a single vertical position,
   wherein the parison formation system is optionally in accordance with any one of Clauses 20-23, 26 or 35-38.
Clause 67. The parison formation system of Clause 66, wherein the linear actuator is not mounted to the machine frame with a height adjustment mechanism such that the position of the stator relative to the machine frame parallel to the plunger actuation axis cannot be adjusted.
Clause 68. The parison formation system of any one of Clauses 66-67, wherein a stroke of the slider relative to the stator is such that the carriage has at least 200 mm, more preferably 205 mm, more preferably 210 mm, more preferably 215 mm and even more preferably 220 mm of travel relative to the machine frame parallel to the plunger actuation axis.
Clause 69. The parison formation system of any one of Clauses 67-68, wherein the carriage has no more than 400 mm of travel parallel to the plunger actuation axis relative to the machine frame.
Clause 70. The parison formation system of any one of Clauses 66-69, wherein the linear actuator is fixedly attachable to the machine frame in at least two horizontal positions that are at a same vertical position.
Clause 71. The parison formation system of any one of Clauses 66-70, wherein the system is free of a height adjustment arrangement between the machine frame and the stator of the linear actuator such that the vertical position of the stator cannot be adjusted relative to the machine frame.
Clause 72. A parison plunger actuation arrangement comprising:
   a carriage operably attachable to a plunger;
   an electric linear actuator coupled to the carriage configured to drive the carriage parallel to a plunger actuation axis, the linear actuator having a stator and a slider, the slider being moveable relative to the stator;
   a heat transfer sleeve extending around and operably thermally communicating with the stator, the heat transfer sleeve having a main body and a plurality of angularly spaced apart radially extending fins; and
   a clamping sleeve extending around the heat transfer sleeve, the heat transfer sleeve and clamping sleeve defining axially extending fluid passages that extend generally parallel to the plunger actuation axis,
   wherein the parison plunger actuation arrangement is optionally in accordance with any one of Clauses 1-19, 27-34 or 41-54.
Clause 73. The parison plunger actuation arrangement of Clause 72, wherein the heat transfer sleeve and clamping sleeve are each C-shaped, wherein the clamping sleeve clamps around the heat transfer sleeve and compresses the heat transfer sleeve into engagement with the linear actuator.
Clause 74. The parison plunger actuation arrangement of any one of Clauses 72-73, further including:
   a mounting block configured to operably mount the linear actuator to a machine frame of a forming machine, the mounting block having at least one inlet air flow path;
   a cooling air manifold operably fluidly coupling the at least one inlet air flow path of the mounting block to the axially extending fluid passages defined, at least in part, by the heat transfer sleeve and the clamping sleeve.
Clause 75. The parison plunger actuation arrangement of Clause 74, wherein the heat transfer sleeve extends through an aperture in the mounting block, the mounting bock defining, at least in part, the axially extending fluid passages.
Clause 76. The parison plunger actuation arrangement of any one of Clauses 74-75, wherein the mounting block and cooling air manifold are formed, at least in part, from a same piece of material.
Clause 77. The parison plunger actuation arrangement of any one of Clauses 72-75, wherein fluid exiting the axially extending fluid passages is not exhausted into the ambient air surrounding the linear actuator or the air surrounding the carriage.
Clause 78. The parison plunger actuation arrangement of any one of Clauses 72-77, wherein a fan for conveying the cooling air through the axially extending fluid passages flows the cooling air within the axially extending fluid passages parallel to the plunger actuation axis in a direction extending away from the carriage.
Clause 79. A parison formation system comprising:
   a first parison plunger actuation arrangement of any one of Clauses 74-78;
   a machine frame including a mounting base, the mounting base, the mounting base including a first mounting base linear actuator cooling fluid flow path therethrough;
   an adaptor bar mechanically interposed between the mounting block of the linear actuator of the first parison plunger actuation arrangement and the mounting base of the machine frame for mounting the mounting block of the first parison plunger actuation arrangement to the machine frame, the adaptor bar having a first adaptor bar linear actuator cooling fluid flow path therethrough, the first adaptor bar linear actuator cooling fluid flow path fluidly connecting the first mounting base flow path with the at least one inlet air flow path of the mounting block of the first parison plunger actuation arrangement,
   wherein the parison formation system is optionally in accordance with any one of Clauses 20-23, 26, 35-38 or 66-71.
Clause 80. The parison formation system of Clause 79, wherein attachment of the mounting block of the first parison plunger actuation arrangement to the adaptor bar fluidly connects the first adaptor bar flow path with the at least one inlet air flow path of the mounting block of the first parison plunger actuation arrangement without requiring manual fluid connections by the operator.
Clause 81. The parison formation system of Clause 79-80 including a second parison plunger actuation arrangement; and
   wherein:
   the adaptor bar has a first exit port fluidly connected to the inlet air flow path of the mounting block of the first parison plunger actuation arrangement; and
   the adaptor bar has a second exit port fluidly connected to the inlet air flow path of the mounting block of the second parison plunger actuation arrangement.
Clause 96. The parison formation system of Clause 81, wherein the first mounting base linear actuator cooling fluid flow path has a third exit port operably fluid connected to the first exit port of the adaptor bar and the first mounting base linear actuator cooling fluid flow path has a fourth exit port distinct from the third exit port, the fourth exit port operably fluidly connected to the second exit port of the adaptor bar such that the first mounting base linear actuator cooling fluid flow path is operably connected to both the first and second exit ports of the adaptor bar.
Clause 82. A plunger assembly for a parison plunger actuation arrangement, the plunger attachable to a carriage, the carriage having a plunger attachment adaptor holder, the plunger attachment adaptor holder configured to operably releasably mount the plunger assembly thereto, the plunger attachment adaptor holder includes a plunger mounting region, the mounting region, defined in part, between first and second retainers, the plunger assembly comprising:
   a plunger configured to engage a gob of glass during formation of a parison;
   a plunger adaptor comprising:
      a mounting body configured to engage the plunger attachment adaptor holder and having a threaded aperture;
      a first threaded split ring half having a first threaded region;
      a second threaded split ring half having a second threaded region, the first and second split ring halves combining to form a threaded attachment member for threadedly engaging the threaded aperture of the mounting body to secure the first and second threaded split ring halves to the mounting body, the first and second threaded split rings operably engaging the plunger for axially securing the plunger to the mounting body,
   wherein the parison plunger actuation arrangement is optionally in accordance with any one of Clauses 1-19, 27-34, 41-54 or 72-78.
Clause 83. The plunger assembly of Clause 82, wherein the plunger has a radially outward extending annular flange that is engaged by a radially inward opening annular groove defined by the first and second split ring halves.
Clause 84. The plunger assembly of Clause 82, wherein the mounting body defines at least one fluid flow aperture therethrough that is independent of the threaded aperture.
Clause 85. The plunger assembly of Clause 82-84, wherein at least one of the first and second threaded split rings defines a fluid flow aperture that communicates with the at least one fluid flow aperture of the mounting body.
Clause 86. A parison plunger actuation arrangement comprising:
   the plunger assembly of Clause 82;
   a carriage having a plunger attachment adaptor holder, the plunger attachment adaptor holder configured to releasably mount the plunger adaptor thereto to operably releasably attach the plunger to the carriage, the plunger attachment adaptor holder includes a plunger mounting region, the mounting region, defined in part, between first and second retainers, the mounting body operably secured within the plunger mounting region by the first and second retainers; and
   a linear actuator coupled to the carriage configured to drive the carriage parallel to a plunger actuation axis,
   wherein the parison plunger actuation arrangement is optionally in accordance with any one of Clauses 1 - 19, 27 - 34, 41-54 or 72 - 78.
Clause 87. A parison formation system comprising:
   a machine frame including a mounting base, the mounting base including a first mounting base flow path therethrough;
   a carriage configured to carry a plunger, the carriage configured to move parallel to a plunger actuation axis, the plunger actuation axis being generally parallel to gravity;
   an electric linear actuator coupled to the carriage configured to drive the carriage parallel to a plunger actuation axis, the linear actuator having a stator and a slider, the slider being moveable relative to the stator, the linear actuator having a mounting block having a mounting block fluid flow path therethrough;
   a first axially extending heat transfer fluid passage in thermal communication with one or more of the stator and/or slider, the first axially extending heat transfer fluid passage extends generally parallel to the plunger actuation axis, the first axially extending heat transfer fluid passage in fluid communication with the mounting block fluid flow path;
   an adaptor bar mechanically interposed between the mounting block of the linear actuator and the mounting base of the machine frame for mounting the mounting block in a fixed position relative to the machine frame, the adaptor bar having a first adaptor bar flow path therethrough, the first adaptor bar flow path fluidly connecting the first mounting base flow path with mounting block fluid flow path,
   wherein the parison formation system is optionally in accordance with any one of Clauses 20-23, 26, 35-38, 66 - 71, 79-81 or 96.
Clause 88. The parison formation system of Clause 87, wherein attachment of the mounting block to the adaptor bar fluidly connects the first adaptor bar flow path with the at least one inlet air flow path of the mounting block without requiring manual fluid connections by the operator.
Clause 89. The parison formation system of Clause 87 or 88, further comprising:
   a heat transfer sleeve extending around and operably thermally communicating with the stator, the heat transfer sleeve having a main body and a plurality of angularly spaced apart radially extending fins; and
   a second sleeve extending around the heat transfer sleeve, the heat transfer sleeve and second sleeve defining a plurality of axially extending fluid passages that extend generally parallel to the plunger actuation axis, the first axially extending heat transfer fluid passage being one of the plurality of axially extending fluid passages formed between the heat transfer sleeve and the second sleeve.
Clause 90. A parison formation system comprising:
   a machine frame;
   a carriage configured to carry a plunger, the carriage configured to move parallel to a plunger actuation axis relative to the machine frame, the plunger actuation axis being generally parallel to gravity;
   a linear actuator coupled to the carriage configured to drive the carriage parallel to a plunger actuation axis;
   a carriage sleeve having an internal cavity in which the carriage moves, the carriage is actuated parallel to the plunger actuation axis between an extended and retracted state;
   a carriage hard stop mounted in a fixed position relative to the machine frame, the carriage hard stop defining an abutment extending into the path of the carriage limiting the axial displacement of the carriage parallel to the plunger actuation axis such that the carriage cannot be pushed out of the carriage sleeve when transitioning to the extended state,
   wherein the parison formation system is optionally in accordance with any one of Clauses 20-23, 26, 35-38, 66 - 71, 79-81, 87-89 or 96.
Clause 91. The parison formation system of Clause 90, further comprising:
   an invert attached to the machine frame, the invert defining an invert axis about which the invert rotates between a blank side position and a blow side position;
   a first neck ring arm attachable to the invert, the first neck ring arm, when attached to the invert, associated with a first blank mold position along the plunger actuation axis;
   a neck ring cooler having at least one neck ring cooler exit port directed at the neck ring when the invert is in the blank side position.
Clause 92. The parison formation system of Clause 91, wherein the carriage hard stop is mounted to the neck ring cooler and extends outward therefrom.
Clause 93. The parison formation system of Clause 90, wherein:
   the carriage has a second abutment surface aligned with the abutment of the carriage hard stop;
   the carriage has a carriage skirt sized and shaped to correspond to the cross-sectional size and shape of the carriage sleeve, the carriage sleeve has a distal end that is spaced a first distance from the second abutment surface parallel to the plunger actuation axis; and
   the abutment is spaced a second distance from an end of the carriage sleeve parallel to the plunger actuation axis, the second distance is less than the first distance such that if the second abutment surface of the carriage abuts the carriage hard stop, the carriage skirt remains inserted in the carriage sleeve.
Clause 94. The parison formation system of Clause 90, wherein the carriage hard stop is adjustably mountable relative to the machine frame to adjust a position of the abutment parallel to the plunger actuation axis.
Clause 95. A method of calibrating a parison formation system of Clause 91 comprising:
   positioning the first neck ring arm adjacent a side of the carriage hard stop opposite the abutment;
   confirming that the first neck ring arm is substantially parallel to the side of the carriage hard stop.

## Claims

1. A parison plunger actuation arrangement comprising:
a carriage configured to carry a plunger for use in forming a parison from a gob, the carriage having a first fluid flow port; and
a first guide connected to the carriage for guiding motion of the carriage parallel to a plunger actuation axis, the first guide defining a fluid flow path, the fluid flow path fluidly coupled to the first fluid flow port;
a linear actuator coupled to the carriage configured to drive the carriage parallel to the plunger actuation axis.

2. The parison plunger actuation arrangement of claim 1, wherein the first guide has a first tubular member and a second tubular member operably slidable relative to the first tubular member parallel to the plunger actuation axis to adjust an axial length of the first guide, the first and second tubular members forming at least part of the fluid flow path of the first guide, optionally wherein the first or second tubular member is telescopically received in the second or first tubular member, respectively.

3. The parison plunger actuation arrangement of claim 2, wherein the first tubular member is operably sealingly connected to the second tubular member.

4. The parison plunger actuation arrangement of any one of claims 1-3, wherein:
the linear actuator includes a mounting block, the carriage movable relative to the mounting block, the mounting block having a mounting block plunger fluid flow path; and
the fluid flow path of the first guide operably fluidly coupled to the mounting block plunger fluid flow path optionally by a connecting tube connected to the mounting block and fluidly connected to and interposed between the mounting block plunger fluid flow path and the fluid flow path of the first guide.

5. The parison plunger actuation arrangement of claim 4 when appended to claims 2 or 3, wherein
the carriage is on a first side of the mounting block;
the connecting tube is on a second side of the mounting block;
the first tubular member is operably connected to the carriage and travels with the carriage when the carriage moves along the plunger actuation axis;
the second tubular member extends, at least in part, on the second side of the mounting block and connects to the connecting tube on the second side of the mounting block to operably fluidly connect the mounting block plunger fluid flow path to the fluid flow path of the guide.

6. The parison plunger actuation arrangement of any one of claims 4-5, wherein the guide is mounted to the mounting block such that a least a portion extends through the mounting block such that at least a portion of the fluid flow path of the first guide extends through the mounting block.

7. The parison plunger actuation arrangement of claim 2 or any claim dependent thereon, wherein the first guide includes a third tubular member slidable relative to the first and second tubular members, the third tubular member forming at least part of the fluid flow path of the first guide and operably fluidly connecting the portion of the first fluid flow path provided by the first tubular member with the portion of the first fluid flow path provided by the second tubular member, optionally wherein the first, second and third tubular members are telescopically interconnected.

8. The parison plunger actuation arrangement of any one of claims 1-7, further comprising a second guide connected to the carriage for guiding motion of the carriage parallel to the plunger actuation axis, the second guide defining a second flow path, the carriage having a second fluid flow port, the second flow path fluidly coupled to the second fluid flow port.

9. The parison plunger actuation arrangement of claim 8, further comprising a plunger operably attached to the carriage, the plunger having an internal plunger fluid flow path operably connected to the first and second fluid flow ports, the plunger fluid flow path fluidly connecting the first fluid flow port to the second fluid flow port such that a continuous fluid flow path is formed by the first guide, second guide and the plunger.

10. The parison plunger actuation arrangement of any one of claims 1-9, comprising a plunger operably attached to the carriage, the plunger having an internal fluid flow path extending between a first port and a second port, the first port connecting to the first fluid flow port of the carriage, the internal fluid flow path connecting the second port of the plunger with the first port and the first fluid flow port of the carriage.

11. The parison plunger actuation arrangement of claim 10, wherein the plunger is a plunger for use in forming a parison using a blowing technique rather than the pressing technique, the fluid used for forming the parison during the blowing technique exiting the plunger through the second port.

12. The parison plunger actuation arrangement of claim 9, wherein the plunger is a plunger for use in forming a parison using a pressing technique and fluid flow through the internal plunger fluid flow path is used to cool the plunger.

13. The parison plunger actuation arrangement of any one of claims 1-12, further comprising a source of air, the source of air operably coupled to the first fluid flow path formed by the first guide, when in operation, fluid from the source of air flows through the first fluid flow path from the source of air to the first fluid port.

14. The parison plunger actuation arrangement of any one of claims 1-13, wherein the first guide provides lateral support of the carriage in a plane perpendicular to the plunger actuation axis.

15. The parison plunger actuation arrangement of any one of claims 1-14, wherein the first guide is not a electro mechanical actuator, pneumatic actuator, or a hydraulic actuator.

16. The plunger actuation arrangement of any one of claims 1-15, wherein the linear actuator is a linear motor having a stator and a slider movable relative to the stator, the slider being free of any fluid flow therethrough for cooling of a plunger or for providing fluid pressure for a blow technique for forming a parison.

17. A parison formation system comprising:
a machine frame including a mounting base, the mounting base including a first mounting base plunger fluid flow path;
a first plunger actuation arrangement of claim 5 or any claim dependent thereon;
an adaptor bar mechanically interposed between the mounting block of the linear actuator and the mounting base of the machine frame for operably fixedly mounting the mounting block in a fixed position to the machine frame, the adaptor bar having a first adaptor bar plunger fluid flow path therethrough, the first adaptor bar plunger fluid flow path fluidly connecting the first mounting base plunger fluid flow path with the mounting block plunger fluid flow path.

18. The parison formation system of claim 17, further comprising a source of air, the source of air operably coupled to the mounting base plunger fluid flow path, when in operation, fluid from the source of air flows through the mounting base plunger fluid flow path, the adaptor bar plunger fluid flow path, the mounting block plunger fluid flow path, and fluid flow path of the first guide when flowing to the carriage.

19. A method of assembling a parison formation system of claim 17 or 18, the method comprising:
mounting adaptor bar to the mounting base such that the first mounting base plunger fluid flow path is fluidly connected to the first adaptor bar plunger fluid flow path; and
mounting the mounting block to the adaptor bar such that the first mounting block plunger fluid flow path is in fluid communication with the first adaptor bar plunger fluid flow path.
